(19) Europäisches Patentamt
European Patent Office
Office européen des brevets

(11) **EP 4 061 645 B1**

(12) **FASCICULE DE BREVET EUROPEEN**

(45) Date de publication et mention
de la délivrance du brevet:
**03.01.2024 Bulletin 2024/01**

(21) Numéro de dépôt: **20817057.1**

(22) Date de dépôt: **09.11.2020**

(51) Classification Internationale des Brevets (IPC):
*B60C 1/00* *(2006.01)*    *C08C 19/25* *(2006.01)*
*C08C 19/44* *(2006.01)*    *C08F 4/54* *(2006.01)*
*C08F 136/06* *(2006.01)*    *C08L 15/00* *(2006.01)*

(52) Classification Coopérative des Brevets (CPC):
(C-Sets disponibles)
**C08C 19/25; B60C 1/0016; C08C 19/44;**
**C08F 136/06; C08L 15/00;** Y02T 10/86    (Cont.)

(86) Numéro de dépôt international:
**PCT/FR2020/052038**

(87) Numéro de publication internationale:
**WO 2021/099717 (27.05.2021 Gazette 2021/21)**

(54) **COMPOSITION DE CAOUTCHOUC COMPRENANT UN POLYBUTADIENE FONCTIONNALISE**

KAUTSCHUKZUSAMMENSETZUNG MIT EINEM FUNKTIONALISIERTEN POLYBUTADIEN

RUBBER COMPOSITION INCLUDING A FUNCTIONALISED POLYBUTADIENE

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **21.11.2019 FR 1913036**

(43) Date de publication de la demande:
**28.09.2022 Bulletin 2022/39**

(73) Titulaire: **COMPAGNIE GENERALE DES**
**ETABLISSEMENTS MICHELIN**
**63040 Clermont-Ferrand (FR)**

(72) Inventeurs:
- **VOISIN, Floriandre**
  **63040 CLERMONT-FERRAND CEDEX 9 (FR)**
- **WATANABE, Makiko**
  **63040 CLERMONT-FERRAND CEDEX 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2018/084733**    **US-A1- 2003 114 612**

- **DATABASE WPI Week 200839 Thomson**
  **Scientific, London, GB; AN 2008-G25459**
  **XP002799543, & WO 2008/041631 A1 (NIPPON**
  **ZEON KK) 10 avril 2008 (2008-04-10)**
- **DATABASE WPI Week 200408 Thomson**
  **Scientific, London, GB; AN 2004-075064**
  **XP002799544, & JP 2003 155398 A (ASAHI KASEI**
  **CORP) 27 mai 2003 (2003-05-27)**

(52) Classification Coopérative des Brevets (CPC):
(Cont.)

C-Sets
**C08F 136/06, C08F 4/545;**
**C08L 15/00, C08K 3/36, C08L 57/02, C08L 91/00**

**Description**

La présente invention est relative à des compositions utilisables notamment dans des bandes de roulement de pneumatiques, en particulier de pneumatiques neige, hiver ou toute saison, aptes à rouler sur des sols recouverts de neige (en anglais appelés « snow tyres », « winter tyres » ou « all season »).

De manière connue, ces pneumatiques neige repérés par une inscription M+S ou M.S. ou encore M&S, marquée sur leurs flancs, se caractérisent par un dessin de la bande de roulement et une structure destinés avant tout à assurer dans la boue et la neige fraîche ou fondante un comportement meilleur que celui des pneumatiques du type routier (en anglais appelés « road type tyre ») conçus pour rouler sur des sols non enneigés.

Les sols enneigés, dits sols blancs, ont pour caractéristique de présenter un faible coefficient de frottement, ce qui a conduit au développement de pneumatiques neige comportant des bandes de roulement à base de compositions de caoutchouc diénique présentant une faible température de transition vitreuse, Tg. Toutefois la performance d'adhérence sur sol mouillé de ces pneumatiques comportant de telles bandes de roulement est généralement inférieure à celle des pneumatiques routiers dont les bandes de roulement sont généralement à base de compositions de caoutchouc de formulations différentes, notamment à plus haute Tg. Pour répondre à cette problématique, la demande WO 2012/069565 propose une bande de roulement dont la composition comprend un élastomère diénique portant au moins une fonction SiOR, R étant un hydrogène ou un radical hydrocarboné en association avec un taux élevé de charge inorganique renforçante et d'un système plastifiant spécifique.

Par ailleurs, depuis que les économies de carburant et la nécessité de protéger l'environnement sont devenues une priorité, il est souhaitable de mettre en oeuvre des compositions caoutchouteuses utilisables pour la fabrication de divers produits semifinis entrant dans la constitution d'enveloppes de pneumatiques possédant une résistance au roulement réduite. Toutefois, la diminution de la résistance au roulement est souvent antinomique avec l'amélioration de l'adhérence tant sur sol mouillé, que sur sol enneigé.

En outre, les bandes de roulement neige ou hiver étant généralement pourvues de sculptures plus souples et/ou constituées de composition de caoutchouc plus tendre que les bandes de roulement dite « été », leur résistance à l'abrasion s'en avère souvent réduite. Aussi, il est important de conserver au maximum, voire améliorer, la résistance à l'abrasion des bandes de roulement neige ou hiver.

Ainsi, les manufacturiers cherchent toujours des solutions pour améliorer davantage un compromis de performances que sont la résistance au roulement, l'adhérence sur sol enneigé, l'adhérence sur sol mouillé et la résistance à l'abrasion de bande de roulement de pneumatiques destinés à rouler notamment sur des sols enneigés.

Poursuivant ses recherches, la Demanderesse a découvert de façon inattendue qu'une composition de caoutchouc spécifique permet d'améliorer davantage le compromis de performances précité.

Ainsi, l'invention a pour objet une composition de caoutchouc à base d'une matrice élastomère comprenant un polybutadiène fonctionnalisé, d'au moins une charge renforçante, et un système de réticulation, dans laquelle le polybutadiène fonctionnalisé est susceptible d'être obtenu par un procédé comprenant les étapes suivantes :

(a) homopolymériser du butadiène à l'aide d'un système catalytique pour former un élastomère pseudo-vivant, ledit système catalytique étant à base d'au moins :

- un monomère diène conjugué,
- un sel d'un ou plusieurs métaux de terre rare d'un acide phosphorique organique,
- un agent d'alkylation comprenant de l'aluminium, et
- un donneur d'halogène comprenant un halogénure d'alkylaluminium,
- ledit sel est en suspension ou en solution dans au moins un solvant hydrocarboné inerte et saturé de type aliphatique ou alicyclique ;

(b) ajouter à l'élastomère pseudo-vivant formé à l'étape (a) un composé polyfonctionnel, comprenant au moins trois groupements fonctionnels, ledit groupement fonctionnel étant susceptible de réagir sur l'extrémité réactive de l'élastomère pseudo-vivant;

(c) ajouter au mélange formé à l'étape (b) un agent de fonctionnalisation répondant à la formule A-Ri-B avec A désignant un groupement susceptible de réagir sur l'extrémité réactive de l'élastomère pseudo-vivant, Ri désignant un atome ou un groupe d'atomes formant une liaison entre A et B, et B désignant une fonction susceptible de réagir avec une charge renforçante ;

(d) récupérer le polybutadiène fonctionnalisé ;

procédé dans lequel, la quantité molaire totale d'aluminium dans le milieu de polymérisation est telle que le rapport molaire « aluminium »/ « sel de terre rare » présente une valeur comprise entre 1 et 5 et dans lequel la polymérisation est conduite à une température comprise entre 40°C et 90°C.

De manière surprenante la Demanderesse a constaté que le polybutadiène fonctionnalisé utilisé dans le cadre de la présente invention présente un fluage à froid faible.

L'invention a également pour objet un bandage pneumatique ou non pneumatique comportant une composition de caoutchouc selon l'invention dans sa bande de roulement.

## I- DÉFINITIONS

Par l'expression « composition à base de », il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « à base de » utilisée pour définir les constituants du système catalytique, on entend le mélange de ces constituants et/ou le produit de la réaction entre ces constituants.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Dans la présente description, le « polybutadiène » sera également dénommé « élastomère ». Il s'agit d'un homopolymère obtenu par polymérisation de butadiène.

L'expression « fort taux de cis » ou « taux de cis élevé » en rapport avec l'élastomère, signifie un taux molaire d'enchaînement d'unités 1,4- cis d'au moins 55%, de préférence d'au moins 90%, par rapport à l'élastomère.

L'expression « pseudo-vivant » en rapport avec l'élastomère, signifie que l'élastomère possède tout ou partie de ces extrémités de chaîne réactives, notamment vis-à-vis d'agents de fonctionnalisation.

Dans la présente, les « chaînes fonctionnalisées » désignent les chaînes du polybutadiène ayant réagi avec l'agent de fonctionnalisation, de formule A-R$_i$-B, tel que défini par la suite.

Le pourcentage moyen de chaînes fonctionnalisées est le rapport entre le poids des chaînes du polybutadiène fonctionnalisées par rapport au poids total de chaînes de polybutadiène. Il est déterminé en multipliant le nombre de fonctions, CH$_2$-Si/PB, en mole par unité de masse du polymère, par la masse molaire en nombre dudit polymère. Le nombre de fonctions, en mole par unité de masse du polymère, est déterminé par RMN $^1$H suivant le protocole décrit en introduction des exemples.

On entend par « terre rare » un métal choisi parmi l'yttrium, le scandium et les lanthanides, métaux ayant un numéro atomique allant de 57 à 71 inclus dans le tableau périodique des éléments de Mendeleïev. De préférence le métal de terre rare est choisi parmi les lanthanides, le néodyme étant plus particulièrement préféré.

On entend par « polymérisation en solution », une polymérisation conduite dans un milieu réactionnel comprenant de 70% à 99% en poids d'un solvant organique, par rapport au poids total des monomères et dudit solvant organique.

On entend par « polymérisation en semi-masse », une polymérisation conduite dans un milieu réactionnel comprenant entre 0% et 70% en poids d'un solvant organique, par rapport au poids total des monomères et dudit solvant organique.

On entend par « polymérisation en masse », une polymérisation conduite dans un milieu réactionnel ne comprenant pas de solvant organique.

Toutes les valeurs de température de transition vitreuse « Tg » décrite dans la présente sont mesurées de manière connue par DSC (Differential Scanning Calorimetry) selon la norme ASTM D3418 (1999).

## II- DESCRIPTION DE L'INVENTION

II-1 Matrice élastomère

La composition de caoutchouc selon l'invention a pour caractéristique essentielle de comprendre un polybutadiène fonctionnalisé susceptible d'être obtenu par un procédé comprenant les étapes suivantes :

(a) homopolymériser du butadiène à l'aide d'un système catalytique pour former un élastomère pseudo-vivant, ledit système catalytique étant à base d'au moins :

- un monomère diène conjugué,
- un sel d'un ou plusieurs métaux de terre rare d'un acide phosphorique organique,
- un agent d'alkylation comprenant de l'aluminium, et
- un donneur d'halogène comprenant un halogénure d'alkylaluminium,
- ledit sel est en suspension ou en solution dans au moins un solvant hydrocarboné inerte et saturé de type aliphatique ou alicyclique ;

(b) ajouter à l'élastomère pseudo-vivant formé à l'étape (a) un composé polyfonctionnel, comprenant au moins trois groupements fonctionnels, ledit groupement fonctionnel étant susceptible de réagir sur l'extrémité réactive de l'élastomère pseudo-vivant;

(c) ajouter au mélange formé à l'étape (b) un agent de fonctionnalisation répondant à la formule A-Ri-B avec A désignant un groupement susceptible de réagir sur l'extrémité réactive de l'élastomère pseudo-vivant, Ri désignant un atome ou un groupe d'atomes formant une liaison entre A et B, et B désignant une fonction susceptible de réagir avec une charge renforçante ;

(d) récupérer le polybutadiène fonctionnalisé ;

procédé dans lequel, la quantité molaire totale d'aluminium dans le milieu de polymérisation est telle que le rapport molaire « aluminium »/ « sel de terre rare » présente une valeur comprise entre 1 et 5 et dans lequel la polymérisation est conduite à une température comprise entre 40°C et 90°C.

Les étapes (a), (b), (c) et (d) d'un procédé permettant d'obtenir le polybutadiène fonctionnel utilisable dans le cadre de la présente invention sont décrites ci-après.

ETAPE (a)

*Système catalytique*

Le système catalytique est avantageusement un système catalytique de type « préformé » à base d'au moins :

- un monomère diène conjugué,
- un sel d'un ou de plusieurs métaux de terre rare d'un acide phosphorique organique, ledit sel étant en suspension ou en solution dans au moins un solvant hydrocarboné inerte, saturé et de type aliphatique ou alicyclique,
- un agent d'alkylation comprenant de l'aluminium, le rapport molaire « agent d'alkylation »/ « sel de terre rare présentant une valeur comprise entre 1 et 5, et
- un donneur d'halogène comprenant un halogénure d'alkylaluminium.

Le système catalytique peut être préparé en discontinu ou en continu. Le système catalytique peut être introduit directement dans le réacteur ou être mélangé préalablement à l'un au moins des autres composants qui alimentent le réacteur de polymérisation.

Le solvant hydrocarboné inerte dans lequel ledit sel de terre rare est en suspension ou en solution est avantageusement un solvant aliphatique ou alicyclique de bas poids moléculaire, tel que le cyclohexane, le méthylcyclohexane, le n-heptane, le pentane, ou un mélange de ces solvants.

Une caractéristique importante du procédé obtention du polybutadiène fonctionnalisé est le rapport molaire « aluminium »/ « sel de terre rare ». Dans le milieu de polymérisation, la quantité molaire totale d'aluminium est telle que le rapport molaire « aluminium/ sel de terre rare », en particulier le rapport molaire « aluminium/ sel de néodyme », présente une valeur comprise entre 1 et 5, avantageusement comprise entre 1 et 4, plus avantageusement allant de 2,5 à 3,8. L'aluminium est apporté par le système catalytique et également, le cas échéant, par un ajout complémentaire dans le milieu de polymérisation d'alkyl aluminium tel que décrit par la suite. De manière surprenante, il a été constaté que ce rapport molaire « aluminium »/ « sel de terre rare » influençait le pourcentage moyen de chaînes fonctionnalisées.

Avantageusement, le système catalytique est tel que ledit sel de terre rare présente une teneur massique en métal de terre rare allant de 12,0% à 13,5%, déterminée à la fois par la technique de titrage complexométrique en retour par l'acide diéthylène diamine tétracétique (EDTA en abrégé) et par la technique de spectrométrie d'émission atomique couplée à un plasma induit (ICP/AES en abrégé). De préférence, ledit sel de terre rare présente une teneur massique en métal de terre rare allant de 12,5% à 13,2%.

Le sel d'acide phosphorique organique de terre rare est avantageusement un tris(organophosphate) de terre rare, l'organophosphate pouvant être choisi parmi les diesters d'acide phosphorique de formule générale (R'O)(R"O)PO(OH), dans laquelle R' et R", identiques ou différents, représentent un radical alkyle, aryle ou alkylaryle. A titre d'exemple on peut citer le tris [dibutyl phosphate] de néodyme, le tris [dipentyl phosphate] de néodyme, le tris [dioctyl phosphate] de néodyme, le tris [bis (2-éthylhexyl) phosphate] de néodyme, le tris [bis (1-méthylheptyl) phosphate] de néodyme, le tris [bis (p-nonylphenyl) phosphate] de néodyme, le tris [butyl (2-éthylhexyl) phosphate] de néodyme, le tris [(1-méthylheptyl) (2-éthylhexyl) phosphate] de néodyme, le tris [(2-éthylhexyl) (p-nonylphényl) phosphate] de néodyme, le tris [bis (2-éthylhexyl) phosphate] de néodyme, le tris[bis(oléyllyl) phosphate] de néodyme ou le tris[bis(linéolyl) phosphate] de néodyme.

En particulier on utilise à titre de sel de terre rare un tris [bis (2-éthylhexyl) phosphate] dudit ou desdits métaux de terre rare. A titre encore plus préférentiel, ledit sel de terre rare est le tris [bis (2-éthylhexyl) phosphate] de néodyme.

A titre de monomère diène conjugué utilisable pour préformer le système catalytique, on peut citer le 1,3-butadiène, à titre préférentiel.

On peut également citer le 2-méthyl-1,3-butadiène (ou isoprène), les 2,3-di (alcoyle en $C_1$ à $C_5$) 1,3-butadiène tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le phényl-1,3-butadiène, le 1,3-pentadiène, le 2,4-hexadiène, ou tout autre diène conjugué ayant entre 4 et 8 atomes de carbone.

A titre d'agent d'alkylation utilisable dans le système catalytique, on peut citer des alkylaluminiums choisis parmi des trialkylaluminiums de formule $Al(R)_3$ ou des hydrures de dialkylaluminium de formule $HAl(R)_2$. Le groupement alkyle, R, comporte avantageusement de 1 à 20 atomes de carbone, plus avantageusement de 1 à 12 atomes de carbone. A titre de tri(alkylaluminium), on peut citer le triéthylaluminium, le triisopropylaluminium, le tri- isobutylaluminium, le tributylaluminium ou le trioctylaluminium. A titre d'hydrure de di(alkylaluminium), on peut citer l'hydrure de diisobutylaluminium.

A titre de donneur d'halogène utilisable dans le système catalytique selon l'invention, on peut citer utiliser un halogénure d'alkyle, un halogénure d'alkylaluminium ou un sesquihalogénure d'alkylaluminium. On utilise préférentiellement un halogénure d'alkylaluminium, le groupement alkyl comportant de 1 à 8 atomes de carbone. Parmi ceux-ci, on préfère le chlorure de diéthylaluminium.

Avantageusement, le ou les métaux de terre rare sont présents dans le système catalytique selon une concentration égale ou supérieure à 0,005 mol/l et, de préférence, allant de 0,010 à 0,1 mol/l et plus particulièrement allant de 0,02 mol/l à 0,08 mol/l.

Le rapport molaire « agent d'alkylation »/ « sel de terre(s) rare(s) » dans ledit système catalytique peut avantageusement présenter une valeur allant de 1 à 2.

Le rapport molaire « donneur d'halogène »/ « sel de terre rare » peut avantageusement présenter une valeur allant de 2 à 3,6 et encore plus préférentiellement de 2,4 à 3,2, encore plus préférentiellement allant de 2,5 à 3.

Le rapport molaire « monomère de préformation »/ « sel de terre(s) rare(s) » peut avantageusement présenter une valeur allant de 15 à 70, voire de 25 à 50.

Un procédé de préparation d'un tel système catalytique est par exemple décrit dans la demande de brevet WO02/38636.

*Ajout décalé d'alkylaluminium*

On peut introduire dans le réacteur de polymérisation, par un flux indépendant de l'introduction du système catalytique utilisé pour la réaction de polymérisation, une quantité supplémentaire prédéterminée d'au moins un composé alkylaluminium de formules $Al(R)_3$ ou $HAl(R)_2$ ou $(R''')_nAl(R''')_{3-n}$, dans lesquelles R et R''' représentent un groupe alkyle de 1 à 20 atomes de carbone, saturé ou non, préférentiellement de 1 à 12 atomes de carbone, R"" représente un groupe allylique, n un entier inclusivement de 1 à 3.

A titre de composé alkylaluminium, on peut citer des alkylaluminiums tels que :

- des trialkylaluminiums tels que par exemple le triméthylaluminium, le triéthylaluminium, le tri-n-propylaluminium, le triisopropylaluminium, le tri-n-butylaluminium, le tri-t-butylaluminium, le triisobutylaluminium, le tri-n-pentylaluminium, le tri-n-hexylaluminium, le tricyclohexylaluminium, de préférence le triisobutylaluminium, ou
- des hydrures de dialkylaluminium tels que par exemple l'hydrure de diéthylaluminium, l'hydrure de diisopropylaluminium, l'hydrure de di-n- propylaluminium, l'hydrure de diisobutylaluminium, l'hydrure de di-n- octylaluminium, l'hydrure de di-n-butylaluminium, de préférence l'hydrure de diisobutylaluminium.

Avantageusement, le rapport molaire « composé alkylaluminium ajouté en décalé »/ « alkylaluminium dans le système catalytique » varie de 1/20 à 50/1, préférentiellement varie de 1/15 à 30/1 et encore plus préférentiellement de 1/10 à 20/1.

La quantité d'alkyle aluminium ajoutée est telle que dans le milieu de polymérisation, le rapport molaire de la quantité molaire totale d'aluminium, par rapport à la quantité molaire de sel de terre rare, notamment de sel de néodyme, soit toujours compris dans la gamme définie précédemment.

*Solvant de polymérisation*

La polymérisation peut s'effectuer en masse. Dans ce cas il n'y a pas d'adjonction de solvant de polymérisation.

La polymérisation peut alternativement s'effectuer en solution ou en semi-masse. Le milieu comprend alors un solvant de polymérisation hydrocarboné inerte, de préférence aliphatique ou alicyclique de faible masse moléculaire, notamment pour des raisons environnementales. On peut citer à titre d'exemple le n-pentane, l'isopentane, les isoamylènes (2-methyl-2-butène, 2-methyl-1-butène et 3 -methyl-1-butène), le 2,2-diméthylbutane, le 2,2-diméthyl-propane (neopentane), le n-heptane, le n-octane, l'isooctane, le cyclopentane, le cyclohexane, le n-hexane, le méthylcyclopentane et le méthylcyclohexane, ainsi que les mélanges de ces composés, le n-pentane étant particulièrement préféré. On peut également citer à titre de solvant, les hydrocarbures aromatiques comme par exemple le benzène ou le toluène.

Le solvant peut être introduit directement dans le réacteur. Il peut également être mélangé préalablement à au moins un autre des composants introduits dans le réacteur de polymérisation, notamment au monomère à polymériser.

*Température de polymérisation*

Une autre caractéristique importante du procédé obtention du polybutadiène fonctionnalisé est la température de polymérisation qui est supérieure à 40°C, rendant le procédé adapté à une mise en oeuvre à l'échelle industrielle. La température de polymérisation est comprise entre 40°C et 90°C, de préférence entre 40°C et 80°C, de préférence entre 45°C et 75°C, et de préférence de 50°C à 70°C.

ETAPE (b)

Le composé polyfonctionnel ajouté à l'élastomère pseudo-vivant formé à l'étape (a) comprend au moins trois groupements fonctionnels et va ainsi permettre de lier entres elles plusieurs chaînes de polybutadiène. Avantageusement, ce composé polyfonctionnel comprend au moins quatre groupements fonctionnels.

Ce composé polyfonctionnel pourra être une petite molécule portant au moins trois, avantageusement au moins quatre, groupements fonctionnels ou un polymère portant ces au moins trois, avantageusement au moins quatre, groupements fonctionnels.

Dans le composé polyfonctionnel, les groupements fonctionnels sont avantageusement identiques. En outre, les groupements fonctionnels sont avantageusement identiques au groupement fonctionnel A de l'agent de fonctionnalisation décrit par la suite.

Le composé polyfonctionnel répond avantageusement à la formule $(E)_n$-Rj, avec n désignant un nombre entier supérieur ou égal à 3, E désignant ledit groupement fonctionnel, Rj désignant un atome ou un groupe d'atomes portant les n groupements E.

Dans un premier mode de réalisation, Rj est un radical hydrocarboné, linéaire, ramifié ou cyclique, et peut contenir un ou plusieurs radicaux aromatiques, et/ou un ou plusieurs hétéroatomes. Avantageusement Rj comprend un ou plusieurs radicaux aromatiques. Outre les n substituants E, ledit radical Rj peut éventuellement être substitué, pour autant que les autres substituants soient inertes vis-à-vis des extrémités réactives de l'élastomère pseudo-vivant.

Dans un deuxième mode de réalisation, Rj est une chaîne hydrocarbonée polymère. Avantageusement, dans l'un ou l'autre de ces modes de réalisation, Rj ne comprend pas d'enchaînement Si-O-Si.

Le groupement fonctionnel E est avantageusement choisi parmi les époxydes, les glycidyloxy, les glycidylamino, les isocyanates, les imines, les aziridines, les imidazoles. Plus avantageusement, le groupement fonctionnel E est choisi parmi les glycidylamino, les isocyanates, les imines et les imidazoles.

Le composé polyfonctionnel est avantageusement choisi parmi le triglycidylaminophenol, le tétraglycidylaminodiphénylméthane (TGMDA), le N,N-Diglycidyl-4-glycidyloxyaniline, le Tris(4-hydroxyphenyl)methane triglycidyl ether, le 1,3-bis(N,N'-diglycidylaminomethyl)cyclohexane, le tétraglycidylxylenediamine, le polyméthylènepolyphénylpolyisocyanate, le tétra(isocyanato)silane (N° CAS : 3410-77-3), le phényltris(méthyléthylketoximio)silane (N° CAS : 34036-80-1), le poly[[1,3-bis[3-(4,5-dihydro-1H-imidazol-1-yl)propyl]-1,3 :1,3-disiloxanedylidene]-1,3-bis(oxy)] (N° CAS : 1325615-33-5). De préférence, le composé polyfonctionnel est avantageusement choisi parmi le triglycidylaminophenol, le tétraglycidylaminodiphénylméthane (TGMDA).

Le rapport molaire « composé polyfonctionnel »/ « aluminium » est avantageusement inférieur à 0,3, plus avantageusement compris entre 0,01 et 0,3.

Là encore, la quantité d'aluminium correspond à la quantité totale d'aluminium présent dans le milieu réactionnel en tenant compte de l'aluminium compris dans le système catalytique et, le cas échéant, de l'aluminium compris dans le composé alkylaluminium supplémentaire ajouté en décalé par rapport au système catalytique.

L'étape (b) de réaction d'au moins un composé polyfonctionnel avec la solution d'élastomère pseudo-vivant est avantageusement mise en oeuvre à une température comprise entre 40°C et 90°C, plus avantageusement comprise entre 40°C et 80°C, encore plus avantageusement comprise entre 45°C et 75°C, et variant avantageusement de 50°C à 70°C.

ETAPE (c)

L'agent de fonctionnalisation susceptible de réagir avec l'élastomère pseudo-vivant de l'étape (b), introduit à l'étape (c), répond à la formule A-Ri-B avec A désignant un groupement susceptible de réagir sur l'extrémité réactive de l'élastomère pseudo-vivant, Ri désignant un atome ou un groupe d'atomes formant une liaison entre A et B et B désignant une fonction susceptible de réagir avec une charge renforçante.

A est avantageusement choisi parmi les époxydes, les glycidyloxy, les glycidylamino, les isocyanates, les imines, les aziridines, les imidazoles. Plus avantageusement, A est choisi parmi les glycidylamino, les isocyanates, les imines et les imidazoles.

B est de préférence un di-alkoxysilane, avantageusement un diéthoxy-silane.

Le groupement Ri est de préférence un radical divalent hydrocarboné, linéaire, ramifié ou cyclique, et peut contenir un ou plusieurs radicaux aromatiques, et/ou un ou plusieurs hétéroatomes. Ledit radical Ri peut éventuellement être substitué, pour autant que les substituants soient inertes vis-à-vis des extrémités réactives de l'élastomère pseudo-vivant. Selon des variantes préférées, le groupement Ri désigne un radical hydrocarboné divalent aliphatique en $C_1$-$C_{18}$, avantageusement en $C_1$-$C_{10}$, plus avantageusement en $C_1$-$C_6$, plus avantageusement en $C_1$-$C_3$ ou en $C_2$-$C_8$, saturé ou non, cyclique ou non, pouvant contenir un ou plusieurs radicaux aromatiques. En particulier, Ri est un radical divalent aliphatique en $C_1$-$C_3$. En particulier, Ri est un radical divalent aliphatique en $C_2$-$C_8$.

Par « groupement susceptible de réagir sur l'extrémité réactive de l'élastomère pseudo-vivant », on entend préférentiellement un groupement choisi parmi notamment les époxydes, les glycidyloxy, les glycidylamino, les isocyanates, les imines, les aziridines, les imidazoles. Plus avantageusement, le groupement susceptible de réagir sur l'extrémité réactive de l'élastomère pseudo-vivant est choisi parmi les glycidylamino, les isocyanates, les imines et les imidazoles.

Par « fonction susceptible d'interagir avec une charge renforçante », on entend préférentiellement un groupe fonctionnel comprenant une ou plusieurs fonctions choisies parmi une amine primaire protégée ou non, secondaire protégée ou non ou tertiaire, une imine, une imide, une amide, un nitrile, un azo, un carbamate, un méthacrylate, un méthacrylamide, un hydroxyle, un carbonyle, un carboxyle, un époxy, un glycidyloxy, un thiol, un sulfure, un disulfure, un thiocarbonyle, un thioester, un sulfonyle, un silane, un silanol, un alcoxysilane, un alcoxydi-alkylsilane, un di-alcoxysilane, un di-alcoxyalkylsilane,un tri-alcoxysilane, un stannyle, un halogénure d'étain, un alkyle d'halogénure d'étain, un aryle d'halogénure d'étain, un polyéther, un hétérocycle azoté, un hétérocycle oxygéné, un hétérocycle soufré et un groupement aromatique substitué par les groupes précédemment cités.

On peut par exemple privilégier la fonction di-alcoxysilane, en particulier diéthoxysilane, en particulier un di-alcoxyalkylsilane tel qu'un diéthoxyalkylsilane, à titre de fonction susceptible d'interagir avec une charge renforçante.

Les différents aspects, préférentiels ou non, qui précèdent et qui concernent notamment la nature du groupement A, du groupement Ri et de la fonction B, sont combinables entre eux. Ainsi, en fonction des difficultés de synthèse et des disponibilités commerciales, mais surtout en fonction du type de charge renforçante envisagée en association avec l'élastomère modifié, l'homme du métier saura quelles combinaisons, notamment les de combinaisons des groupements A et B cités plus haut, sont particulièrement avantageuses.

A titre d'illustrations de ces variantes, on peut citer les agents de fonctionnalisation tel que le (3-glycidyloxypropyl) méthyldiéthoxysilane, le N-(3-diéthoxy(méthyl)silylpropyl)-4,5-dihydroimidazole, le 2-(3,4- époxycyclohexyl)éthyl méthyldiéthoxysilane, le tris(3- diéthoxy(méthyl)silylpropyl) isocyanurate, le 3-isocyanatopropylméthyldiéthoxysilane. Parmi ces agents de fonctionnalisation, le (3-glycidyloxypropyl) méthyldiéthoxysilane et le 3-isocyanatopropylméthyldiéthoxy-silane sont particulièrement avantageux.

Le rapport molaire « agent de fonctionnalisation »/ « aluminium » est avantageusement d'au moins 1. De préférence, le rapport molaire « agent de fonctionnalisation »/ « aluminium » est d'au moins 1/1 et d'au plus 10/1, préférentiellement d'au plus 5/1, voire d'au plus 2/1.

Ainsi, par rapport à l'aluminium, le composé polyfonctionnel est en défaut alors que l'agent de fonctionnalisation est en quantité équimolaire ou en excès.

Là encore, la quantité d'aluminium correspond à la quantité totale d'aluminium présent dans le milieu réactionnel en tenant compte de l'aluminium compris dans le système catalytique et, le cas échéant, de l'aluminium compris dans le composé alkylaluminium supplémentaire ajouté en décalé par rapport au système catalytique.

Une autre caractéristique importante du procédé obtention du polybutadiène fonctionnalisé est l'ordre d'ajout du composé polyfonctionnel et de l'agent de fonctionnalisation : le composé polyfonctionnel est ajouté avant introduction de l'agent de fonctionnalisation.

L'étape (c) de fonctionnalisation, est avantageusement mise en oeuvre à une température comprise entre 40°C et 90°C, plus avantageusement comprise entre 40°C et 80°C, encore plus avantageusement comprise entre 45°C et 75°C, et variant avantageusement de 50°C à 70°C.

ETAPE (d)

A ce stade et selon une variante de l'invention, le procédé de synthèse d'un polybutadiène fonctionnalisé peut être poursuivi de manière connue en soi. Ainsi, selon une mise en oeuvre, il est possible d'injecter un stoppeur et un anti-oxydant à cette étape.

Le procédé se poursuit ensuite de manière connue en soi par la séparation et récupération du polybutadiène fonctionnalisé préparé. Le butadiène n'ayant pas réagi et/ou le solvant peuvent être éliminés, selon des méthodes connues de l'homme de l'art.

Le polybutadiène fonctionnalisé récupéré à l'issue de ces différentes étapes peut ensuite être conditionné de manière connue en soi, sous forme de balles par exemple.

Le polybutadiène fonctionnalisé de la composition selon l'invention, susceptible d'être obtenu par le procédé décrit ci-dessus, comprend donc des chaînes libres de polybutadiène ayant réagi seulement avec l'agent de fonctionnalisation et des chaînes de polybutadiène liées entre elles via le composé polyfonctionnel.

Le polybutadiène fonctionnalisé présente avantageusement une viscosité Mooney ML(1+4) à 100° C égale ou supérieure à 40, en particulier allant de 40 à 80.

Le polybutadiène fonctionnalisé présente en outre avantageusement un fluage réduit, qui peut se caractériser notamment par une valeur de fluage à froid (« cold-flow en anglais) CF(1+6) à 100°C du polybutadiène fonctionnalisé inférieure à 1 g, plus avantageusement inférieure à 0,5 g, encore plus avantageusement inférieure à 0,2 g.

De préférence, le polybutadiène fonctionnalisé présente à la fois :

- un taux molaire d'enchaînement d'unités 1,4- cis d'au moins 55%, de préférence d'au moins 90%, par rapport au polybutadiène,
- un indice de polydispersité inférieur à 2,3,
- un pourcentage moyen de chaînes fonctionnalisées supérieur à 25%,
- une viscosité Mooney ML(1+4) à 100° C égale ou supérieure à 40, et
- une valeur de cold-flow CF(1+6) à 100°C inférieure à 1 g, de préférence inférieure à 0,5 g.

Par ailleurs, le polybutadiène fonctionnalisé présente avantageusement une température de transition vitreuse (Tg) inférieure à -100°C, de préférence inférieure à -105°c, de préférence comprise entre -110°C et -105°C.

Avantageusement, le polybutadiène fonctionnalisé présente un taux moyen de chaînes fonctionnalisées compris entre 25% et 80%. Dans un mode de réalisation, le polybutadiène fonctionnalisé a un pourcentage moyen de chaînes fonctionnalisées compris entre 25% et 60%. Dans un autre mode de réalisation, le polybutadiène fonctionnalisé a un pourcentage moyen de chaînes fonctionnalisées compris entre 40% et 80%, avantageusement entre 40% et 70%.

Le taux du polybutadiène fonctionnalisé dans la composition selon l'invention est avantageusement compris dans un domaine allant de 50 à 100 pce, de préférence de 75 à 100 pce, de préférence encore de 90 à 100 pce.

II-2 Charge renforçante

La composition de la bande de roulement du pneumatique selon l'invention comprend en outre une charge renforçante, connue pour ses capacités à renforcer une composition de caoutchouc utilisable pour la fabrication de pneumatiques.

La charge renforçante peut comprendre un noir de carbone, une charge inorganique renforçante ou un de leurs mélanges. Avantageusement, la charge renforçante est choisie dans le groupe consistant en les noirs de carbones, les silices ou un de leurs mélanges.

Avantageusement, la charge renforçante comprend majoritairement de la silice.

Le taux de charge renforçante dans la composition est avantageusement compris dans un domaine allant de 40 à 200 pce, de préférence de 90 à 180 pce, de préférence de 100 à 150 pce.

Le taux de silice dans la composition peut être compris dans un domaine allant de 40 à 200 pce, de préférence de 90 à 180 pce, de préférence de 100 à 150 pce.

Par ailleurs, le taux de noir de carbone dans la composition de la bande de roulement du pneumatique selon l'invention peut être compris dans un domaine allant de 0 à 40 pce, de préférence de 1 à 20 pce, de préférence de 2 à 10 pce.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.

La surface spécifique BET des noirs de carbone est mesurée selon la norme D6556-10 [méthode multipoints (au minimum 5 points) - gaz : azote - domaine de pression relative P/P0 : 0.1 à 0.3].

Les silices, utilisables dans le cadre de la présente invention peuvent être toute silice connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g.

La surface spécifique BET des silices est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1 heure à 160°C - domaine de pression relative p/po : 0.05 à 0.17). La surface spécifique CTAB de la silice est déterminée selon la norme française NF T 45-007 de novembre 1987 (méthode B).

De préférence, la silice présente une surface spécifique BET inférieure à 200 $m^2$/g et/ou une surface spécifique CTAB est inférieure à 220 $m^2$/g, de préférence une surface spécifique BET comprise dans un domaine allant de 125 à 200 $m^2$/g et/ou une surface spécifique CTAB comprise dans un domaine allant de 140 à 170 $m^2$/g.

A titres de silices utilisables dans le cadre de la présente invention, on citera par exemple les silices précipitées hautement dispersibles (dites "HDS") « Ultrasil 7000 » et « Ultrasil 7005 » de la société Evonik, les silices « Zeosil 1165MP, 1135MP et 1115MP » de la société Rhodia, la silice « Hi-Sil EZ150G » de la société PPG, les silices « Zeopol 8715, 8745 et 8755 » de la Société Huber, les silices à haute surface spécifique telles que décrites dans la demande WO 03/16837.

Pour coupler la silice à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

II-3 Système de réticulation

Le système de vulcanisation comprend préférentiellement du soufre moléculaire et/ou au moins un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé dans la composition à un taux préférentiel compris entre 0,5 et 12 pce, en particulier entre 1 et 10 pce. L'accélérateur de vulcanisation est utilisé dans la composition à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

II-4 Système plastifiant

*II-4.1 Résine plastifiante*

La composition de caoutchouc selon l'invention peut comprendre au moins une résine plastifiante présentant une température de transition vitreuse supérieure à 20°C, dite « haute Tg », (également dénommée « résine plastifiante » dans la présente dans un souci de simplification de rédaction »).

La dénomination « résine » est réservée dans la présente demande, par définition connue de l'homme du métier, à un composé qui est solide à température ambiante (23°C), par opposition à un composé plastifiant liquide tel qu'une huile.

Les résines plastifiantes sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont généralement par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. « *Rubber Tires and Mechanical Goods* »). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 20°C (le plus souvent comprise entre 30°C et 95°C).

De manière connue, ces résines plastifiantes peuvent être qualifiées aussi de résines thermoplastiques en ce sens qu'elles se ramollissent par chauffage et peuvent ainsi être moulées. Elles peuvent se définir également par un point ou température de ramollissement (en anglais, "*softening point*"). La température de ramollissement d'une résine plastifiante est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 $\mu$m, avant injection dans l'appareillage. L'appareillage utilisé est par exemple une chaîne chromatographique "Waters alliance" selon les conditions suivantes :

- solvant d'élution est le tétrahydrofurane,
- température 35°C ;
- concentration 1 g/litre ;
- débit : 1 ml/min ;
- volume injecté : 100 $\mu$l ;
- étalonnage de Moore avec des étalons de polystyrène ;
- jeu de 3 colonnes "Waters" en série ("Styragel HR4E", "Styragel HR1" et "Styragel HR 0.5") ;
- détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

Toutes les valeurs de masses molaires indiquées dans la présente demande sont donc relatives à des courbes d'étalonnages réalisées avec des étalons de polystyrène.

Selon un mode de réalisation préférentiel de l'invention, la résine plastifiante présente au moins une quelconque, de préférence 2 ou 3, plus préférentiellement l'ensemble, des caractéristiques suivantes :

- une Tg supérieure à 25°C (en particulier compris entre 30°C et 100°C), plus préférentiellement supérieure à 30°C (en particulier compris entre 30°C et 95°C) ;
- un point de ramollissement supérieur à 50°C (en particulier compris entre 50°C et 150°C) ;
- une masse molaire moyenne en nombre (Mn) comprise entre 300 et 2000 g/mol, préférentiellement entre 400 et 1500 g/mol ;
- un indice de polymolécularité (Ip) inférieur à 3, préférentiellement à 2 (rappel : Ip = Mw/Mn avec Mw masse molaire moyenne en poids).

Les résines plastifiantes de haute Tg préférentielles ci-dessus sont bien connues de l'homme du métier et disponibles commercialement, par exemple vendues en ce qui concerne les :

- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C5/ vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

La résine plastifiante présentant une température de transition vitreuse supérieure à 20°C peut être choisie dans le groupe comprenant ou constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et leurs mélanges. De préférence, la résine plastifiante est choisie dans le groupe comprenant ou constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et leurs mélanges. De préférence encore, la résine plastifiante présentant une température de transition vitreuse supérieure à 20°C est une résine terpénique ou une résine copolymère de coupe C5/ coupe C9, de préférence une résine copolymère de coupe C5/ coupe C9.

Le terme "terpène" regroupe ici de manière connue les monomères alpha-pinène, betapinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'orthométhylstyrène, le méta-méthylstyrène, le para-méthylstyrène, le vinyle-toluène, le paratertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$).

Plus particulièrement, on peut citer les résines plastifiantes choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines plastifiantes ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe $C_5$/ styrène

ou résines coupe C$_5$/ coupe C$_9$, ou encore par la société Struktol sous dénomination "40 MS" ou "40 NS" (mélanges de résines aromatiques et/ou aliphatiques).

Avantageusement, le taux de la résine plastifiante présentant une température de transition vitreuse supérieure à 20°C dans la composition de la bande de roulement selon l'invention est compris de 25 à 100 pce, de préférence entre 50 et 100 pce, de préférence entre 55 et 90 pce. Le taux total de résine plastifiante présentant une température de transition vitreuse supérieure à 20°C est préférentiellement compris dans un domaine allant de 25 à 100 pce, de préférence entre 50 et 100 pce, de préférence entre 55 et 90 pce.

Avantageusement également, le taux total de résine plastifiante présentant une température de transition vitreuse supérieure à 20°C est compris dans un domaine allant de 25 à 100 pce, de préférence entre 50 et 100 pce, de préférence entre 55 et 90 pce.

*II-4.2 Plastifiant liquide à 23°C*

Bien que cela ne soit pas nécessaire à la mise en oeuvre de la présente invention, le système plastifiant de la composition de caoutchouc de la bande de roulement du pneumatique selon l'invention peut comporter un plastifiant liquide à 23°C, dite à « basse Tg », c'est-à-dire qui par définition présente une Tg inférieure à -20°C, de préférence inférieur à -40°C. Selon l'invention, la composition peut optionnellement comprendre de 0 à 60 pce d'un plastifiant liquide à 23°C.

Lorsqu'un plastifiant liquide à 23°C est utilisé, son taux dans la composition de la bande de roulement selon l'invention peut être compris dans un domaine allant de 1 à 40 pce, de préférence de 2 à 15 pce. De préférence, le taux total de plastifiant liquide à 23°C est compris dans un domaine allant de 0 à 60 pce, de préférence de 1 à 40 pce, de préférence de 2 à 15 pce.

Tout plastifiant liquide à 23°C (ou huile d'extension), qu'il soit de nature aromatique ou non-aromatique, connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes qui sont par nature solides à température ambiante.

Conviennent particulièrement les plastifiants liquides à 23°C choisis dans le groupe comprenant ou constitué par les polymères diéniques liquides, les huiles polyoléfiniques, les huiles naphténiques, les huiles paraffiniques, les huiles DAE, les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*) et les huiles SRAE (*Safety Residual Aromatic Extract oils*), les huiles minérales, les huiles végétales, les plastifiants éthers, les plastifiants esters, les plastifiants phosphates, les plastifiants sulfonates et les mélanges de ces plastifiants liquides à 23°C.

Par exemple, le plastifiant liquide à 23°C peut être une huile de pétrole, de préférence non aromatique. Un plastifiant liquide est qualifié de non aromatique dès lors qu'il présente une teneur en composés aromatiques polycycliques, déterminée avec l'extrait dans du DMSO selon la méthode IP 346, de moins de 3 % en poids, par rapport au poids total du plastifiant.

Le plastifiant liquide à 23°C peut également être un polymère liquide issu de la polymérisation d'oléfines ou de diènes, comme les polybutènes, les polydiènes, en particulier les polybutadiènes, les polyisoprènes (connus également sous l'appellation « LIR ») ou les copolymères de butadiène et d'isoprène, ou encore les copolymères de butadiène ou d'isoprène et de styrène ou les mélanges de ces polymères liquides. La masse molaire moyenne en nombre de tels polymères liquides est comprise préférentiellement dans un domaine allant de 500 g/mol à 50 000 g/mol, préférentiellement de 1 000 g/mol à 10 000 g/mol. A titre d'exemple peuvent être cités les produits « RICON » de SARTOMER.

Lorsque le plastifiant liquide à 23°C est une huile végétale, il peut s'agir par exemple d'une huile choisie dans le groupe comprenant ou constitué par les huiles de lin, carthame, soja, maïs, coton, navette, ricin, abrasin, pin, tournesol, palme, olive, noix de coco, arachide, pépin de raisin et les mélanges de ces huiles. L'huile végétale est préférentiellement riche en acide oléique, c'est-à-dire que l'acide gras (ou l'ensemble des acides gras si plusieurs sont présents) dont elle dérive, comporte de l'acide oléique selon une fraction massique au moins égale à 60%, encore plus préférentiellement selon une fraction massique au moins égale à 70%. A titre d'huile végétale, est utilisée avantageusement une huile de tournesol qui est telle que l'ensemble des acides gras dont elle dérive comprend l'acide oléique selon une fraction massique égale ou supérieure à 60%, de préférence à 70% et, selon un mode particulièrement avantageux de réalisation de l'invention, selon une fraction massique égale ou supérieure à 80%.

Selon un autre mode de réalisation particulier de l'invention, le plastifiant liquide est un triester choisi dans le groupe constitué par les triesters d'acide carboxylique, d'acide phosphorique, d'acide sulfonique et les mélanges de ces triesters.

A titre d'exemple de plastifiants phosphates, on peut citer ceux qui contiennent entre 12 et 30 atomes de carbone, par exemple le trioctyle phosphate. A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Le triester de glycérol est préféré. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Lorsque le plastifiant liquide à 23°C est un plastifiant éther, il peut s'agir par exemple de polyéthylène glycol ou de polypropylène glycol.

De préférence, le plastifiant liquide à 23°C est choisi une huile végétale ou une de leur mélange, de préférence une huile végétale choisie dans le groupe constitué par l'huile de tournesol, l'huile de colza et leurs mélanges.

Avantageusement également, la composition de la bande de roulement du pneumatique selon l'invention ne comprend pas de polymère liquide.

*II-4.3 Résine plastifiante visqueuse à 20°C*

Bien que cela ne soit pas nécessaire à la mise en oeuvre de la présente invention, le système plastifiant de la composition de caoutchouc de la bande de roulement du pneumatique selon l'invention peut comporter une résine plastifiante visqueuse à 20°C, dite « de faible Tg », c'est-à-dire qui par définition présente une Tg comprise dans un domaine allant de -40°C à -20°C. Selon l'invention, la composition peut optionnellement comprendre, en complément ou en substitution de tout ou partie du plastifiant liquide à 23°C, de 0 à 140 pce de résine plastifiante visqueuse à 20°C.

De préférence, la résine plastifiante visqueuse à 20°C présente au moins une quelconque, de préférence 2 ou 3, de préférence l'ensemble, des caractéristiques suivantes :

- une Tg comprise entre -40°C et 0°C, plus préférentiellement entre -30°C et 0°C et plus préférentiellement encore entre -20°C et 0°C ;
- une masse moléculaire moyenne en nombre (Mn) inférieure à 800 g/mol, de préférence inférieure à 600 g/mol et plus préférentiellement inférieure à 400 g/mol ;
- un point de ramollissement compris dans un domaine allant de 0 à 50°C, préférentiellement de 0 à 40°C, plus préférentiellement de 10 à 40°C, de préférence de 10 à 30°C ;
- un indice de polymolécularité (Ip) inférieur à 3, plus préférentiellement inférieur à 2 (rappel : Ip = Mw/Mn avec Mw masse moléculaire moyenne en poids).

Les résines plastifiantes visqueuses à 20°C préférentielles ci-dessus sont bien connues de l'homme du métier et disponibles commercialement, par exemple vendues en ce qui concerne les :

- résine aliphatique : par la société CRAY VALLEY sous la dénomination« Wingtack 10» (Mn=480 g/mol ; Mw=595 g/mol ; Ip=1.2 ; SP=10°C; Tg=-28°C),
- résines coumarone indène : par la société Rütgers Chemicals sous la dénomination « Novares C30 » (Mn=295 g/mol ; Mw=378 g/mol ; Ip=1.28 ; SP=25°C ; Tg=-19°C) ;
- résines de coupe C9 : par la société Rütgers Chemicals sous la dénomination « Novares TT30 » (Mn=329 g/mol ; Mw=434 g/mol ; Ip=1.32 ; SP=25°C ; Tg=-12°C).

Lorsqu'une résine plastifiante visqueuse à 20°C est utilisée, son taux dans la composition de la bande de roulement selon l'invention peut être compris dans un domaine allant de 20 à 120 pce, de préférence de 40 à 90 pce.

Très avantageusement, le taux total de plastifiant liquide à 23°C et de résine plastifiante visqueuse à 20°C est compris dans un domaine allant de 0 à 50 pce, de préférence de 10 à 45 pce, de préférence de 15 à 30 pce.

II-5 Additifs possibles

Les compositions de caoutchouc peuvent comporter optionnellement également tout ou partie des additifs usuels habituellement utilisés dans les compositions d'élastomères en particulier pour bande de roulement de pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

II-6 Préparation des compositions de caoutchouc

Les compositions conformes à l'invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

De telles phases ont été décrites par exemple dans les demandes EP-A-0501227, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudé avec une autre composition de caoutchouc) sous la forme d'un semi-fini (ou profilé) de caoutchouc utilisable par exemple comme bande de roulement de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, sous pression.

II-7 Article de caoutchouc et bandage

La présente invention a également pour objet un article de caoutchouc fini ou semi-fini comprenant une composition selon l'invention.

Avantageusement, l'article en caoutchouc est un bandage pneumatique ou non-pneumatique, de préférence un bandage pneumatique. A titre d'exemple de bandage non-pneumatique, qui sont par ailleurs bien connus de l'homme du métier, on peut citer ceux décrits notamment dans les demande WO 03/18332 et WO 2013/095499.

La présente invention a également pour objet un bandage pneumatique ou non-pneumatique, de préférence un bandage pneumatique, comprenant une composition selon l'invention ou un article de caoutchouc semi-fini selon l'invention.

De manière connue, la bande de roulement d'un bandage pneumatique ou non-pneumatique comporte une surface de roulement destinée à être en contact avec le sol lorsque le bandage roule. La bande de roulement est pourvue d'une sculpture comprenant notamment des éléments de sculpture ou blocs élémentaires délimités par diverses rainures principales, longitudinales ou circonférentielles, transversales ou encore obliques, les blocs élémentaires pouvant en outre comporter diverses incisions ou lamelles plus fines.

Avantageusement, la composition selon l'invention est présente dans la bande de roulement du bandage, de préférence dans la partie radialement externe de la bande de roulement, destinée à être en contact avec le sol lorsque le bandage roule.

**III- MODES DE REALISATION PREFERES**

Au vu de ce qui précède, les modes de réalisations préférés de l'invention sont décrits ci-dessous :

A. Composition de caoutchouc à base d'une matrice élastomère comprenant un polybutadiène fonctionnalisé, d'au moins une charge renforçante, et un système de réticulation, dans laquelle le polybutadiène fonctionnalisé est susceptible d'être obtenu par un procédé comprenant les étapes suivantes :

(a) homopolymériser du butadiène à l'aide d'un système catalytique pour former un élastomère pseudo-vivant, ledit système catalytique étant à base d'au moins :

- un monomère diène conjugué,
- un sel d'un ou plusieurs métaux de terre rare d'un acide phosphorique organique,
- un agent d'alkylation comprenant de l'aluminium, et
- un donneur d'halogène comprenant un halogénure d'alkylaluminium,
- ledit sel est en suspension ou en solution dans au moins un solvant hydrocarboné inerte et saturé de type aliphatique ou alicyclique ;

(b) ajouter à l'élastomère pseudo-vivant formé à l'étape (a) un composé polyfonctionnel, comprenant au moins trois groupements fonctionnels, ledit groupement fonctionnel étant susceptible de réagir sur l'extrémité réactive de l'élastomère pseudo-vivant;
(c) ajouter au mélange formé à l'étape (b) un agent de fonctionnalisation répondant à la formule A-Ri-B avec A désignant un groupement susceptible de réagir sur l'extrémité réactive de l'élastomère pseudo-vivant, Ri désignant un atome ou un groupe d'atomes formant une liaison entre A et B, et B désignant une fonction susceptible de réagir avec une charge renforçante ;
(d) récupérer le polybutadiène fonctionnalisé ;

procédé dans lequel, la quantité molaire totale d'aluminium dans le milieu de polymérisation est telle que le rapport molaire « aluminium »/« sel de terre rare » présente une valeur comprise entre 1 et 5 et dans lequel la polymérisation est conduite à une température comprise entre 40°C et 90°C.
B. Composition selon le mode de réalisation B, dans laquelle, dans le système catalytique du procédé d'obtention du polybutadiène fonctionnalisé, le rapport molaire « aluminium »/« sel de terre rare » présente une valeur comprise entre 1 et 4, avantageusement allant de 2,5 à 3,8.
C. Composition selon l'un quelconque des modes de réalisation précédents, dans laquelle, la polymérisation du procédé d'obtention du polybutadiène fonctionnalisé est conduite à une température comprise entre 45°C et 75°C.
D. Composition selon l'un quelconque des modes de réalisation précédents, dans laquelle, dans le système catalytique du procédé d'obtention du polybutadiène fonctionnalisé, ledit sel est le tris [bis (2-éthylhexyl) phosphate] de néodyme.
E. Composition selon l'un quelconque des modes de réalisation précédents, dans laquelle le rapport molaire « agent de fonctionnalisation »/« aluminium » du procédé d'obtention du polybutadiène fonctionnalisé est avantageusement d'au moins 1.
F. Composition selon l'un quelconque des modes de réalisation précédents, dans laquelle, pour l'agent de fonctionnalisation de formule A-Ri-B du procédé d'obtention du polybutadiène fonctionnalisé, A est choisi parmi les glycidylamino, les isocyanates, les imines et les imidazoles.
G. Composition selon l'un quelconque des modes de réalisation précédents, dans laquelle, pour l'agent de fonctionnalisation de formule A-Ri-B du procédé d'obtention du polybutadiène fonctionnalisé, B est un di-alkoxysilane, avantageusement un diéthoxy-silane.
H. Composition selon l'un quelconque des modes de réalisation précédents, dans laquelle, pour l'agent de fonctionnalisation de formule A-Ri-B du procédé d'obtention du polybutadiène fonctionnalisé, Ri est un radical divalent aliphatique en C1-C10.
I. Composition selon l'un quelconque des modes de réalisation précédents, dans laquelle le rapport molaire « composé polyfonctionnel »/« aluminium » du procédé d'obtention du polybutadiène fonctionnalisé est inférieur à 0,3.
J. Composition selon l'un quelconque des modes de réalisation précédents, dans laquelle le composé polyfonctionnel du procédé d'obtention du polybutadiène fonctionnalisé répond à la formule (E)n-Rj, avec n désignant un nombre entier supérieur ou égal à 3, E désignant ledit groupement fonctionnel et Rj désignant un atome ou un groupe d'atomes portant les n groupements E.
K. Composition selon l'un quelconque des modes de réalisation précédents, dans laquelle, dans le composé polyfonctionnel du procédé d'obtention du polybutadiène fonctionnalisé, ledit groupement fonctionnel est choisi parmi les glycidylamino, les isocyanates, les imines et les imidazoles.
L. Composition selon l'un quelconque des modes de réalisation précédents, dans laquelle le composé polyfonctionnel du procédé d'obtention du polybutadiène fonctionnalisé est le tétraglycidylaminodiphénylméthane.

M. Composition selon l'un quelconque des modes de réalisation précédents, dans laquelle le polybutadiène fonctionnalisé comprend des chaînes libres de polybutadiène ayant réagi seulement avec l'agent de fonctionnalisation et des chaînes de polybutadiène liées entre elles via le composé polyfonctionnel.

N. Composition selon l'un quelconque des modes de réalisation précédents, dans laquelle le polybutadiène fonctionnalisé présente une valeur de cold-flow CF(1+6) à 100°C inférieure à 1 g, de préférence inférieure à 0,5 g.

O. Composition selon l'un quelconque des modes de réalisation précédents, dans laquelle le polybutadiène présente :

- un taux molaire d'enchaînement d'unités 1,4- cis d'au moins 55%, de préférence d'au moins 90%, par rapport au polybutadiène,
- un indice de polydispersité inférieur à 2,3,
- un pourcentage moyen de chaînes fonctionnalisées supérieur à 25%,
- une viscosité Mooney ML(1+4) à 100° C égale ou supérieure à 40, et
- une valeur de cold-flow CF(1+6) à 100°C inférieure à 1 g, de préférence inférieure à 0,5 g.

P. Composition selon l'un quelconque des modes de réalisation précédents, dans laquelle le polybutadiène fonctionnalisé présente une température de transition vitreuse inférieure à -100°C, de préférence inférieure à -105°C.

Q. Composition selon l'un quelconque des modes de réalisation précédents, dans laquelle le polybutadiène fonctionnalisé présente un taux moyen de chaînes fonctionnalisées compris entre 25% et 80%, de préférence compris entre 25% et 60%.

R. Composition selon l'un quelconque des modes de réalisation A à P, dans laquelle le polybutadiène fonctionnalisé présente un taux moyen de chaînes fonctionnalisées compris entre 40% et 80%.

S. Composition selon l'un quelconque des modes de réalisation précédents, dans laquelle le taux du polybutadiène fonctionnalisé est compris dans un domaine allant de 50 à 100 pce, de préférence de 75 à 100 pce, de préférence encore de 90 à 100 pce.

T. Composition selon l'un quelconque des modes de réalisation précédents, dans laquelle la charge renforçante est choisie dans le groupe consistant en les noirs de carbones, les silices ou un de leurs mélanges.

U. Composition selon l'un quelconque des modes de réalisation précédents, dans laquelle la charge renforçante comprend majoritairement de la silice.

V. Composition selon l'un quelconque des modes de réalisation précédents, dans laquelle le taux de charge renforçante dans la composition est compris dans un domaine allant de 40 à 200 pce, de préférence de 90 à 180 pce, de préférence de 100 à 150 pce.

W. Composition selon l'un quelconque des modes de réalisation T à V, dans laquelle le taux de silice dans la composition est compris dans un domaine allant de 40 à 200 pce, de préférence de 90 à 180 pce, de préférence de 100 à 150 pce.

X. Composition selon l'un quelconque des modes de réalisation T à W, dans laquelle le taux de noir de carbone dans la composition est compris dans un domaine allant de 0 à 40 pce, de préférence de 1 à 20 pce, de préférence de 2 à 10 pce.

Y. Composition selon l'un quelconque des modes de réalisation précédents, dans laquelle le système de vulcanisation est à base de soufre et/ou au moins un agent donneur de soufre.

Z. Composition selon l'un quelconque des modes de réalisation précédents, dans laquelle la composition comprend en outre au moins une résine plastifiante présentant une température de transition vitreuse supérieure à 20°C.

AA. Composition selon le mode de réalisation Z, dans laquelle la résine plastifiante présentant une température de transition vitreuse supérieure à 20°C est choisie dans le groupe constituée par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et leurs mélanges.

BB. Composition selon le mode de réalisation Z, dans laquelle la résine plastifiante présentant une température de transition vitreuse supérieure à 20°C est une résine terpénique ou une résine copolymère de coupe C5/ coupe C9, de préférence une résine copolymère de coupe C5/ coupe C9.

CC. Composition selon l'un quelconque des modes de réalisation Z à BB, dans laquelle le taux de la résine plastifiante présentant une température de transition vitreuse supérieure à 20°C, dans la composition est compris dans un domaine allant de 25 à 100 pce, de préférence entre 50 et 100 pce, de préférence entre 55 et 90 pce.

DD. Composition selon l'un quelconque des modes de réalisation Z à CC, dans laquelle le taux total de résine plastifiante présentant une température de transition vitreuse supérieure à 20°C, dans la composition est compris dans un domaine allant de 25 à 100 pce, de préférence entre 50 et 100 pce, de préférence entre 55 et 90 pce.

EE. Composition selon l'un quelconque des modes de réalisation précédents, dans laquelle la composition comprend en outre optionnellement de 0 à 60 pce de plastifiant liquide à 23°C.

FF. Composition selon le mode de réalisation EE, dans laquelle le plastifiant liquide à 23°C est choisi dans le groupe constitué par les polymères diéniques liquides, les huiles polyoléfiniques, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et leurs mélanges.

GG. Composition selon le mode de réalisation EE, dans laquelle le plastifiant liquide à 23°C est choisi une huile végétale ou une de leur mélange, de préférence une huile végétale choisie dans le groupe constitué par l'huile de tournesol, l'huile de colza et leurs mélanges.

HH. Composition selon l'un quelconque des modes de réalisation EE à GG, dans laquelle, le taux du plastifiant liquide à 23°C dans la composition est compris dans un domaine allant de 1 à 40 pce, de préférence de 2 à 15 pce.

II. Composition selon l'un quelconque des modes de réalisation EE à HH, dans laquelle, le taux total de plastifiant liquide à 23°C dans la composition est compris dans un domaine allant de 1 à 40 pce, de préférence de 2 à 15 pce.

JJ. Article de caoutchouc fini ou semi-fini comportant une composition de caoutchouc selon l'un quelconque des modes de réalisation A à II.

KK. Bandage pneumatique ou non pneumatique comportant une composition de caoutchouc selon l'un quelconque des modes de réalisation A à II, ou un article de caoutchouc semi-fini selon le mode de réalisation JJ.

LL. Bandage selon le mode de réalisation KK, dans laquelle la composition de caoutchouc selon l'un quelconque des modes de réalisation A à II est présente dans la bande de roulement du bandage.

## IV- EXEMPLES

IV-1 Mesures et tests utilisés

*Propriétés dynamiques :*

Les propriétés dynamiques G* et tan($\delta$)Max sont mesurées sur un viscoanalyseur (Metravib VA4000), selon la norme ASTM D5992-96. On enregistre la réponse d'un échantillon de composition vulcanisée (éprouvette cylindrique de 2 mm d'épaisseur et de 79 mm$^2$ de section), soumis à une sollicitation sinusoïdale en cisaillement simple alterné, à la fréquence de 10Hz, dans les conditions normales de température (23°C) ou à 0°C selon la norme ASTM D 1349-09 pour les mesures de tan($\delta$)Max, ou bien à - 20°C pour les mesures de G*. On effectue un balayage en amplitude de déformation de 0,1% à 50% (cycle aller), puis de 50% à 0,1% (cycle retour). Pour le cycle retour, on indique la valeur maximale de tan $\delta$ observée (tan($\delta$)max), ainsi que l'écart de module complexe ($\Delta$G*) entre les valeurs à 0,1% et à 50% de déformation (effet Payne).

Les résultats exploités sont les facteurs de perte tan($\delta$)Max à 0°C et à 23°C, ainsi que le module complexe de cisaillement dynamique G* à -20°C.

Les résultats de tan($\delta$)Max à 0°C sont exprimés en base 100, la valeur 100 étant attribuée au témoin. Un résultat supérieur à 100 indique une performance améliorée, c'est-à-dire que la composition de l'exemple considéré traduit une meilleure adhérence sur sol mouillé de la bande de roulement comportant une telle composition.

Les résultats de tan($\delta$)Max à 23°C et de G* à -20°C sont exprimés en base 100, la valeur 100 étant attribuée au témoin. Un résultat inférieur à 100 indique une performance améliorée, c'est-à-dire que la composition de l'exemple considéré traduit respectivement une meilleure résistance au roulement et une meilleure adhérence sur sol enneigé de la bande de roulement comportant une telle composition.

*Résistance à l'abrasion*

La résistance à l'abrasion obtenue par détermination de la perte en volume par abrasion est mesurée selon la norme NF ISO 4649 de novembre 2010 qui consiste à déterminer la perte en volume d'un échantillon après déplacement de 40 mètres linéaires sur du papier abrasif normé.

Plus particulièrement, la détermination de la perte de volume par abrasion est effectuée selon les indications de la norme NF ISO 4649 de novembre 2010 (méthode B), en utilisant un abrasimètre où l'éprouvette cylindrique est soumise à l'action d'une toile abrasive de grains P60 et fixée sur la surface d'un tambour tournant sous une pression de contact de 5 N (N=Newton) et pour une course de 40 m. On mesure une perte de masse de l'échantillon et on calcule la perte de volume d'après la masse volumique ($\rho$) du matériau constituant l'éprouvette. La masse volumique ($\rho$) du matériau constituant l'éprouvette est obtenue classiquement sur la base des fractions massiques de chaque constituant du matériau et de leur masse volumique ($\rho$) respective.

Les résultats sont indiqués en base 100. La valeur arbitraire 100 étant attribuée à la composition témoin permet de comparer le volume de perte de substance de différentes compositions testées. La valeur exprimée en base 100 pour la composition testée est calculée selon l'opération : (valeur mesurée du volume de perte de substance de la composition témoin / valeur mesurée du volume de perte de substance de la composition testée) X 100. De cette façon, un résultat supérieur à 100 indiquera une diminution de la perte en volume et donc une amélioration de la résistance à l'abrasion, qui correspond à une amélioration de la performance de résistance à l'usure. Inversement, un résultat inférieur à 100 indiquera une augmentation de la perte en volume et donc une diminution de la résistance à l'abrasion, qui correspond à une baisse de la performance de résistance à l'usure.

*Viscosité Mooney*

Pour les polymères et les compositions de caoutchouc, les viscosités Mooney ML(1+4) 100°C sont mesurées selon la norme ASTM D 1646 (décembre 2015).
Un consistomètre oscillant est utilisé tel que décrit dans la norme ASTM D 1646. La mesure de plasticité Mooney se fait selon le principe suivant : l'élastomère ou la composition à l'état cru (i.e. avant cuisson) est moulé(e) dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney ML(1+4) est exprimée en "unité Mooney" (UM, avec 1 UM = 0,83 N.m).
La différence entre la viscosité Mooney de la composition et la viscosité Mooney de l'élastomère permet de mesurer la processabilité ou mise en oeuvre à cru. Plus cette différence est faible, meilleure est la mise en oeuvre à cru.

*Calorimétrie différentielle*

Les températures de transition vitreuse (Tg) des élastomères sont déterminées à l'aide d'un calorimètre différentiel ("differential scanning calorimeter") avec une vitesse de balayage de 20°C/min.

*Spectroscopie proche infrarouge (NIR)*

La microstructure des élastomères est caractérisée par la technique de spectroscopie proche infrarouge (NIR).
La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN 13C. La microstructure est alors calculée à partir du spectre NIR d'un film d'élastomère d'environ 730 $\mu$m d'épaisseur. L'acquisition du spectre est réalisée en mode transmission entre 4000 et 6200 cm-1 avec une résolution de 2 cm-1, à l'aide d'un spectromètre proche infrarouge à transformée de Fourier Bruker Tensor 37 équipé d'un détecteur InGaAs refroidi par effet Peltier.

*Viscosité inhérente*

La viscosité inhérente des élastomères à 25 °C est déterminée à partir d'une solution d'élastomère à 0,1 g.dL-1 dans le toluène, selon le principe suivant.
La viscosité inhérente est déterminée par la mesure du temps d'écoulement t de la solution de polymère et du temps d'écoulement to du toluène, dans un tube capillaire.
Dans un tube Ubbelhode (diamètre du capillaire 0,46 mm, capacité 18 à 22 mL), placé dans un bain thermostaté à 25 $\pm$ 0,1 °C, le temps d'écoulement du toluène et celui de la solution polymère à 0,1 g.dL-1 sont mesurés.
La viscosité inhérente est obtenue par la relation suivante :

[Math 1]

$$\eta_{inh} = \frac{1}{C} \, ln \left[ \frac{(t)}{(t_0)} \right]$$

avec :

C : concentration de la solution de polymère dans le toluène en g.dL$^{-1}$,
t : temps d'écoulement de la solution de polymère dans le toluène en seconde,
$t_0$ : temps d'écoulement du toluène en seconde,

$\eta_{inh}$ : viscosité inhérente exprimée en dL.g$^{-1}$.

*Cold-Flow (CF(1+6) 100°C) (fluage à froid)*

Il s'agit de mesurer la masse d'élastomère extrudée à travers une filière calibrée pendant un temps donné (6 heures) et dans des conditions fixées (T = 100 °C). La filière a un diamètre de 6,35 mm, une épaisseur de 0,5 mm et est située au fond et au centre d'une coupe cylindrique évidée de 52 mm de diamètre.

Dans ce dispositif sont placés 40 ± 4 g d'élastomère préalablement mis sous forme de pastille (2 cm d'épaisseur et 52 mm de diamètre). Sur la pastille d'élastomère est positionné un piston calibré de 1 kg (± 5 g). L'ensemble est ensuite placé dans une étuve à 100 ± 0,5°C.

Les conditions n'étant pas stabilisées lors de la première heure dans l'étuve, le produit extrudé à t = 1 heure est découpé puis jeté.

La mesure est ensuite poursuivie pendant 6 heures ± 5 mn, durant lesquelles le produit est laissé dans l'étuve. A l'issue des 6 heures, l'échantillon de produit extrudé est découpé puis pesé. Le résultat de la mesure est la masse d'élastomère pesée, exprimée en g. Plus ce résultat est faible, plus l'élastomère résiste au fluage à froid.

*Détermination du nombre de fonctions, en mole par unité de masse du polymère : détermination de la quantité de (3-glycidyloxypropyl) méthyldiéthoxysilane (GMDE) greffé aux polybutadiènes obtenus.*

*a) Principe :*

Cette détermination est réalisée par une analyse RMN sur des échantillons coagulés. Les spectres sont acquis sur un spectromètre Bruker Avance III HD 500 MHz équipé d'une sonde Bruker cryo-BBFO z-grad 5 mm.

Les spectres RMN 1D 1H sont enregistrés à partir d'une expérience simple impulsion avec un angle de basculement de 30°, le nombre de répétitions est de 128 avec un délai de recyclage de 5 secondes. Les expériences sont réalisées à 25 °C.

*b) Préparation échantillon :*

25 mg d'échantillon sont solubilisés dans 1 mL de disulfure de carbone (CS2) ; 70 $\mu$L de cyclohexane deutéré (C6D12) sont ajoutés à la solution de polymère pour le verrouillage champ/fréquence du champ.

*c) Caractérisation :*

Les spectres RMN contiennent les signaux caractéristiques des motifs Butadiène (BR1-4 et BR1-2). En plus de ceux-ci, des signaux isolés (de faible intensité) attribués à l'agent de fonctionnalisation, ici la molécule GMDE, sont observés. Les déplacements chimiques 1H des signaux caractéristiques de cette molécule dans la matrice BR sont présentés ci-dessous :

| $\delta$1H (ppm) | Attribution |
|---|---|
| 5.45 | -CH=CH2 BR1-2 |
| 5.23 | -CH=CH- BR1-4 |
| 4.85 | -CH=CH2 BR1-2 |
| 3.61 | -O-CH2-CH3 (GMDE) |
| 0.00 | -Si-CH3 (GMDE) |
| 0.46 | -Si-CH2- (GMDE) |

Les quantifications ont été effectuées à partir de l'intégration des spectres RMN 1D 1H à l'aide du logiciel Topspin.

Les zones d'intégration considérées pour la quantification sont :

- A : entre 5,5 ppm et 5,0 ppm correspondant à 2 protons du BR1-4 et 1 proton du BR1-2,
- B : entre 5,5 et 4,75 ppm correspondant à 2 protons du BR1-2
- C : entre 3,66 et 3,56 ppm correspondant à 2 protons du GMDE (Motif -O-CH2-CH3)
- D : entre 0.02 et -0.10 ppm correspondant à 3 proton du GMDE (motif -Si-CH3)

La quantification de la microstructure peut être réalisée en pourcentage molaire comme suit :

$$\text{\% molaire d'un motif} = \text{intégrale 1H d'un motif} * 100 / \Sigma \text{ (intégrales 1H de chaque motif).}$$

avec :

- Intégrale 1H motif BR1-4 = (A-(B/2))/2
- Intégrale 1H motif BR1-2 = B/2
- Intégrale 1H motif -O-CH2-CH3 GMDE = C/2
- Intégrale 1H motif -Si-CH3 GMDE = D/3

A l'aide de l'intégration du spectre RMN 1D 1H de la partie purifiée de l'échantillon : la quantification du motif GMDE greffé peut être réalisée en pourcentage molaire comme décrit ci-dessus.

*Détermination de la distribution des masses molaires des polybutadiènes obtenus par la technique de chromatographie d'exclusion stérique (SEC).*

*a) Principe de la mesure :*

La chromatographie d'exclusion stérique ou SEC (size exclusion chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

*b) Préparation du polymère :*

Il n'y a pas de traitement particulier de l'échantillon de polymère avant analyse. Celui-ci est simplement solubilisé dans du tétrahydrofurane à une concentration d'environ 1 g/l.

*c) Analyse SEC :*

Cas c1) L'appareillage utilisé est une chaîne chromatographique « WATERS alliance ». Le solvant d'élution est le tétrahydrofurane, le débit de 1 ml/min., la température du système de 35° C et la durée d'analyse de 30 min. On utilise un jeu de deux colonnes WATERS de dénomination commerciale « STYRAGEL HT6E ».

Le volume injecté de la solution de l'échantillon de polymère est 100 μl. Le détecteur est un réfractomètre différentiel « WATERS 2140 » et le logiciel d'exploitation des données chromatographiques est le système « WATERS MILLENIUM ».

Cas c2 L'appareillage utilisé est un chromatographe « WATERS alliance ». Le solvant d'élution est le tétrahydrofurane, le débit de 0,7 ml/mn, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 μl. Le détecteur est un réfractomètre différentiel « WATERS modèle RI32X » et le logiciel d'exploitation des données chromatographiques est le système « WATERS MILLENIUM ».

*Synthèse du système catalytique Nd/Bd/HDiBA/CDEA*

Le système catalytique Nd/Bd/HDiBA/CDEA dilué dans le MCH est synthétisé selon le mode opératoire décrit dans WO-A-02/38636 (pages 8 à 11) :

En vue de l'obtention de ce catalyseur, le sel de phosphate de néodyme à l'état de poudre est introduit dans un réacteur préalablement nettoyé de ses impuretés. Ce sel est ensuite soumis à un barbotage à l'azote pendant 10 min dans le but de rendre le milieu réactionnel inerte. Les étapes successives suivantes sont ensuite réalisées :

- Première étape de solvatation :
  Un solvant constitué de MCH préalablement distillé, purifié sur alumines et barboté à l'azote est introduit dans le réacteur. En vue de la formation d'un gel, la durée et la température de mise en contact de ce solvant et du sel de néodyme sont de 30 min à 30°C sous agitation.

- Seconde étape d'addition du monomère :
Le butadiène préalablement purifié sur alumines et barboté à l'azote est ensuite introduit dans le réacteur à 30°C. Ce monomère servira à préformer le catalyseur lors de l'étape de vieillissement.

  - Troisième étape d'alkylation :
  L'HDiBA en solution dans le MCH est ensuite introduit dans le réacteur à titre d'agent d'alkylation du sel de néodyme, selon une concentration d'environ 1 mol/L. La durée de l'alkylation est de 15 min. La température de la réaction d'alkylation est égale à 30° C.

    - Quatrième étape d'halogénation :
    Le CDEA en solution dans le MCH est ensuite introduit dans le réacteur à titre de donneur d'halogène, selon une concentration d'environ 0,5 mol/L. La température du milieu réactionnel est portée à 60° C.

      - Cinquième étape de vieillissement :
      Le mélange ainsi obtenu est vieilli en maintenant la température de 60° C pendant une durée de 50 min.

La solution catalytique obtenue est finalement stockée sous atmosphère d'azote à une température comprise entre -15° C et -5° C.

Le système catalytique est caractérisé par sa formule catalytique qui est donnée sous la forme Nd/Monomère/Agent Alkylant/Agent halogénant en rapports molaires indexés sur le sel de néodyme. Dans les exemples, la concentration en néodyme La formule catalytique est 1/36/3/2,6 avec une concentration de 0,038 mol/L.

« Al total » définit la quantité totale d'aluminium présent dans le milieu réactionnel.

IV-2 Essais élastomériques

Plusieurs polybutadiènes (exemples comparatifs EC1 à EC8 et exemples conformes à l'invention I1 à I4) ont été synthétisés et comparés selon le procédé suivant.

Dans un réacteur alimenté en continu agité de 32 L, supposé parfaitement agité selon l'homme de l'art, ont été introduits en continu du méthylcyclohexane et du butadiène. Le débit massique en butadiène est de 5,30 kg.h$^{-1}$ et la concentration massique en butadiène dans le mélange méthylcyclohexane/butadiène était de 9% en poids.

De l'hydrure de diisobutylaluminium (HDIBA) a été introduit en quantité suffisante afin de neutraliser les impuretés protiques apportées par les différents constituants présents dans l'entrée du premier réacteur. À l'entrée du réacteur, une certaine quantité de HDIBA pour 100 g de butadiène et une certaine quantité du système catalytique décrit précédemment pour 100g de butadiène ont été introduits.

Les différents débits sont calculés afin que le temps de séjour moyen dans le réacteur soit de 25 min. La température est maintenue à température de polymérisation donnée.

À la sortie du réacteur de polymérisation, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C.

En sortie du réacteur de polymérisation, à une température au moins égale à la température de polymérisation, une certaine quantité pour 100 g de butadiène de (3-glycidyloxypropyl) méthyldiéthoxysilane en solution dans le méthylcyclohexane ont été ajoutés à la solution de polymère vivant selon un ratio molaire ((3-glycidyloxypropyl) méthyldiéthoxysilane)/(Al total) de 2,5. Optionnellement, préalablement ou dans le même temps que l'introduction du (3-glycidyloxypropyl) methyldiéthoxysilane, une certaine quantité pour 100 g de butadiène de 4,4'-Methylenebis(N,N-diglycidylaniline) (ou TGMDA) en solution dans le toluène ont été ajoutés à la solution de polymère vivant avec un ratio molaire (4,4'-Methylenebis(N,N-diglycidylaniline))/(Al total) de 0,10.

Les polymères ainsi obtenus ont été soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Les polymères ainsi traités ont été ensuite séparés de sa solution par une opération de stripping à la vapeur d'eau, puis séchés sur un outil à cylindres à 100 °C.

Les quantités de HDIBA (en μmol pour 100g de butadiène), les quantités du système catalytique (en μmol pour 100g de butadiène) correspondant à la concentration en néodyme (en μmcm), la température de polymérisation, les viscosités inhérentes "initiales", les masse molaires moyenne en nombre, Mn, déterminée par la technique de SEC, les indices de polymolécularité, Ip, la quantité de (3-glycidyloxypropyl) methyldiéthoxysilane en solution dans le méthylcyclohexane (« Agent de fonctionnalisation » en µmol pour 100g de butadiène), les quantités optionnellement utilisées de 4,4'-Methylenebis(N,N-diglycidylaniline) en solution dans le toluène (« Composé polyfonctionnel » en µmol pour 100g de butadiène) et le moment d'introduction : soit avant (AV), soit en même temps (EMT) que le (3-glycidyloxypropyl) methyldiéthoxysilane), les viscosités inhérentes "finales", les viscosités Mooney de ces polymères, les taux de motifs 1,4-cis par rapport à la masse de polymère déterminées par la méthode NIR, les températures de transition vitreuses, Tg, de ces polymères, les cold-flow CF(1+6)100°C des polymères et les nombres de fonctions mesurés par RMN[1]H ainsi que le pourcentage moyen de chaînes fonctionnalisées sont présents dans le tableau 1 ci-dessous.

Dans ce tableau, 1'« Al total » est calculé en prenant en compte 1'HDIBA du catalyseur (ratio Nd/Al de 3) et l'HDIBA ajouté dans la réaction de polymérisation. Le pourcentage moyen de chaînes fonctionnalisées (en %) est obtenu par la formule : $(CH_2\text{-Si/PB})*Mn*1.10\text{-}4$ avec $CH_2$-Si/PB en mmol/Kg et Mn en g/mol.

[Tableau 1]

| | EC1 | EC2 | EC3 | EC4 | I1 | EC5 | EC6 | I2 | EC7 | EC8 | I3 | I4 |
|---|---|---|---|---|---|---|---|---|---|---|---|---|
| HDIBA (µmol / 100g butadiène) | 150 | 150 | 230 | 250 | 150 | 150 | 50 | 50 | 180 | 180 | 150 | 150 |
| Concentration Nd (µmcm) | 600 | 407 | 450 | 238 | 600 | 600 | 530 | 530 | 340 | 340 | 600 | 600 |
| Ratio Al total/Nd | 3,2 | 3,4 | 5 | 5 | 3,2 | 3,2 | 3,2 | 3,2 | 3,5 | 3,2 | 3,2 | 3,2 |
| T° de polymérisation (°C) | 50 | 50 | 50 | 50 | 50 | 50 | 75 | 76 | 80 | 90 | 50 | 50 |
| viscosités inhérentes "initiiles" (dL/g) | 2,20 | 2,62 | 2,30 | 2,82 | 2,13 | 2,15 | 2,20 | 2,20 | 2,10 | 2,15 | 2,21 | 2,23 |
| Mn (g/mol) | 90000 | 182300 | 150400 | 195000 | 140470 | 146170 | 146170 | 146170 | 150400 | 149000 | 147290 | 149000 |
| $I_p$ | 1,9 | 1,8 | 1,8 | 1,80 | 1,90 | 1,80 | 1,80 | 1,80 | 1,80 | 1,90 | 1,90 | 1,80 |
| Agent de fonctionnalisation (µmol/ 100g butadiène) | 4900 | 3200 | 2600 | 2300 | 4600 | 4600 | 4200 | 4200 | 3700 | 3700 | 4800 | 4800 |
| Agent de fonctionnalisation/Al total | 2,5 | 2,5 | 2,5 | 2,5 | 2,5 | 2,5 | 2,5 | 2,5 | 2,5 | 2,5 | 2,5 | 2,5 |
| Composé polyfonctionnel (µmol/100g butadiène) | - | - | - | - | 202 (AV) | 202 (EMT) | - | 202 (AV) | - | - | 102 (AV) | 102 (AV) |
| Composé polyfonctionnel/Al total | 0 | 0 | 0 | 0 | 0,10 | 0,10 | 0 | 0,10 | 0 | 0 | 0,05 | 0,05 |
| viscosités inhérentes "finales" (dL.g⁻¹) | 2,20 | 2,62 | 2,30 | 2,82 | 2,42 | 2,20 | 2,20 | 2,31 | 2,14 | 2,15 | 2,40 | 2,48 |
| Mooney | 22 | 39 | 24 | 37 | 42 | 22 | 22 | 27 | 24 | 23 | 40 | 44 |
| taux de 1,4-cis | 93,5% | 96,4% | 98,2% | 98,6% | 93,6% | 93,4% | 92% | 92,8% | 94,2% | 94% | 94% | 94% |
| Tg (°C) | -107 | -108 | -108 | -108 | -107 | -107 | -107 | -107 | -107 | -107 | -107 | -107 |
| Cold-flow CF(1+6)100°C (g/6h) | 1,678 | 1,269 | 1,712 | 1,156 | 0,20 | 1,650 | 1,710 | 0,10 | 1,560 | ,140 | 0,18 | 0,063 |
| Nb de fonction (mmol/kg) | 3,9 | 2,74 | 2,52 | 1,90 | 3,84 | 3,63 | 3,15 | 3,20 | 1,86 | ND | 3,66 | 3,66 |
| % de fonctionnalisation | 57% | 50% | 38% | 37% | 54% | 53% | 46% | 40% | 28% | NA | 54% | 54% |

ND : Non détectable NA : Non applicable

Ces résultats montrent qu'il est préférable, quelle que soit la masse molaire obtenue, d'avoir un rapport Al Total/sel de Nd le plus faible possible pour obtenir un taux de chaînes fonctionnalisées élevé (voir EC1 et EC2 en comparaison avec EC3 et EC4). Par ailleurs, il est avantageux d'ajouter le composé polyfonctionnel avant l'agent de fonctionnalisation pour obtenir un taux de chaînes fonctionnalisées élevé et un fluage réduit (voir II en comparaison avec EC5). La comparaison de EC1, EC6, EC7 et EC8 montre l'impact de la température de polymérisation sur le taux de chaînes fonctionnalisées. Enfin, la comparaison de EC1 et 13 ou de EC6 et 12 montre l'effet bénéfique de l'ajout d'un composé polyfonctionnel pour obtenir un fluage réduit et conserver un taux de chaînes fonctionnalisées élevé.

Ainsi, seuls les polybutadiènes fonctionnalisés utilisables dans le cadre de la présente invention présentent un fluage à froid réduit, ce qui est particulièrement avantageux pour stocker ou utiliser le polybutadiène dans un procédé de fabrication d'une composition de caoutchouc.

IV-3 Préparation des compositions

Dans les exemples qui suivent, les compositions caoutchouteuses ont été réalisées comme décrit au point II.6 ci-dessus. En particulier, la phase « non-productive » a été réalisée dans un mélangeur de 0,4 litres pendant 3,5 minutes, pour une vitesse moyenne de palettes de 50 tours par minutes jusqu'à atteindre une température maximale de tombée de 160°C. La phase « productive » a été réalisée dans un outil à cylindre à 23°C pendant 5 minutes.

La réticulation de la composition a été conduite à une température comprise entre 130°C et 200°C, sous pression.

IV-4 Essais de compositions de caoutchouc

Les exemples présentés ci-dessous ont pour objet de comparer le compromis de performance entre la résistance au roulement, l'adhérence sur sol mouillé, l'adhérence sur sol enneigé et la résistance à l'abrasion d'une composition conforme à la présente invention (C1) avec trois compositions témoin (T1 à T3). Le Tableau 2 ci-dessous présente les compositions testées (en pce), ainsi que les résultats obtenus. Les résultats de performance sont exprimés en pourcentage base 100 par rapport à la composition témoin T1.

La composition témoin T1 est une composition classiquement utilisée dans une bande de roulement de pneumatique hiver.

Les compositions C1, T2 et T3 diffèrent les unes des autres de par la nature du polybutadiène utilisé. Le système plastifiant a été adapté de manière à ce que les formulations présentent des rigidités et Tg équivalentes. Ces compositions permettent d'étudier l'impact de la nature du polybutadiène.

[Tableau 2]

|  | T1 | C1 | T2 | T3 |
|---|---|---|---|---|
| SBR1[(1)] | 75 | - | - | - |
| BR1[(2)] | 25 | - | 100 | - |
| BR2[(3)] | - | - | - | 100 |
| BR3[(4)] | - | 100 | - | - |
| Silice(S) | 120 | 120 | 120 | 120 |
| Agent de couplage[(6)] | 9,6 | 9,6 | 9,6 | 9,6 |
| N234[(7)] | 4,0 | 4,0 | 4,0 | 4,0 |
| Résine plastifiante[(8)] | 55 | 77,3 | 76,2 | 68 |
| Plastifiant liquide[(9)] | 27 | 6,0 | 9,6 | 20,8 |
| Antioxydant[(10)] | 2,8 | 2,8 | 2,8 | 2,8 |
| Cire anti-ozone[(11)] | 2,0 | 2,0 | 2,0 | 2,0 |
| Acide stéarique[(12)] | 3,0 | 3,0 | 3,0 | 3,0 |
| DPG[(13)] | 2,0 | 2,0 | 2,0 | 2,0 |
| ZnO[(14)] | 1,5 | 1,5 | 1,5 | 1,5 |
| Accélérateur de vulcanisation[(15)] | 1,5 | 1,5 | 1,5 | 1,5 |

(suite)

|  | T1 | C1 | T2 | T3 |
|---|---|---|---|---|
| Soufre | 1,5 | 1,5 | 1,5 | 1,5 |
|  |  |  |  |  |
| Tan(8) max à 23°C | 100 | 118 | 134 | 122 |
| G* à -20°C | 100 | 84 | 82 | 99 |
| Tan(8) max à 0°C | 100 | 116 | 116 | 105 |
| Résistance à l'abrasion | 100 | 150 | 150 | 122 |

(1) SBR1 : SBR (étoilé Sn) avec 15,5% de motif styrène et 24% de motif 1,2 de la partie butadiénique, et porteur d'une fonction silanol en bout de chaîne élastomère (Tg = -65°C) (2) BR1 : Polybutadiène obtenu par synthèse anionique présentant un taux molaire de 1,4 cis de 38% (Tg = -92°C) - « Buna CB 55 NF Rubber » de la société Lanxess (3) BR2 : Polybutadiène néodyme présentant un taux molaire de 1,4 cis de 98% (Tg = -108°C) (4) BR3 :Polybutadiène fonctionnalisé néodyme présentant un taux molaire de 1,4 cis de 94% (Tg = - 108°C), « Composition I1 » préparé selon le procédé de polymérisation décrit à l'exemple IV-2 ci-dessus (5) Silice « Zeosil 1165 MP » de la société Rhodia type « HDS » (6) Silane liquide TESPT « Si69 » de la société Degussa (7) Noir de carbone de grade N234 selon la norme ASTM D-1765 (8) Résine en C5/C9 « Résine ECR-373 » de la société ExxonMobil (Tg = 44°C) (9) Trioléate de glycérol (huile de tournesol à 85% en poids d'acide oléique) « Lubrirob Tod 1880 » de la société Novance (10) N-1,3-diméthylbutyl-N-phénylparaphénylènediamine « Santoflex 6-PPD » de la société Flexsys (11) Cire anti-ozone « VARAZON 4959 » de la société Sasol Wax (12) Acide stéarique « Pristerene 4931 » de la société Uniqema (13) Diphénylguanidine « Perkacit DPG » de la société Flexsys (14) Oxyde de zinc de grade industriel de la société Umicore (15) N-cyclohexyl-2-benzothiazyle sulfénamide « Santocure CBS » de la société Flexsys

Ces résultats montrent que l'utilisation d'un polybutadiène fonctionnalisé conforme à l'invention permet d'améliorer à la fois l'adhérence sur sol enneigé, l'adhérence sur sol mouillé et la résistance à l'abrasion par rapport à une composition classiquement utilisée en bande de roulement de pneumatique hiver. Par ailleurs, l'amélioration de ces trois performances se fait sans trop pénaliser la résistance au roulement par rapport à d'autres compositions ne différant que par la nature du polybutadiène utilisé.

**Revendications**

1. Composition de caoutchouc à base d'une matrice élastomère comprenant un polybutadiène fonctionnalisé, d'au moins une charge renforçante, et un système de réticulation, dans laquelle le polybutadiène fonctionnalisé est susceptible d'être obtenu par un procédé comprenant les étapes suivantes :

   (a) homopolymériser du butadiène à l'aide d'un système catalytique pour former un élastomère pseudo-vivant, ledit système catalytique étant à base d'au moins :

   - un monomère diène conjugué,
   - un sel d'un ou plusieurs métaux de terre rare d'un acide phosphorique organique,
   - un agent d'alkylation comprenant de l'aluminium, et
   - un donneur d'halogène comprenant un halogénure d'alkylaluminium,
   - ledit sel est en suspension ou en solution dans au moins un solvant hydrocarboné inerte et saturé de type aliphatique ou alicyclique ;

   (b) ajouter à l'élastomère pseudo-vivant formé à l'étape (a) un composé polyfonctionnel, comprenant au moins trois groupements fonctionnels, ledit groupement fonctionnel étant susceptible de réagir sur l'extrémité réactive de l'élastomère pseudo-vivant ;

(c) ajouter au mélange formé à l'étape (b) un agent de fonctionnalisation répondant à la formule A-Ri-B avec A désignant un groupement susceptible de réagir sur l'extrémité réactive de l'élastomère pseudo-vivant, Ri désignant un atome ou un groupe d'atomes formant une liaison entre A et B, et B désignant une fonction susceptible de réagir avec une charge renforçante ;

(d) récupérer le polybutadiène fonctionnalisé ;

procédé dans lequel, la quantité molaire totale d'aluminium dans le milieu de polymérisation est telle que le rapport molaire « aluminium »/ « sel de terre rare » présente une valeur comprise entre 1 et 5 et dans lequel la polymérisation est conduite à une température comprise entre 40°C et 90°C.

2. Composition selon la revendication 1, dans laquelle le polybutadiène fonctionnalisé comprend des chaînes libres de polybutadiène ayant réagi seulement avec l'agent de fonctionnalisation et des chaînes de polybutadiène liées entre elles via le composé polyfonctionnel.

3. Composition selon l'une quelconque des revendications précédentes, dans laquelle le polybutadiène fonctionnalisé présente une valeur de fluage à froid CF(1+6) à 100°C inférieure à 1 g, de préférence inférieure à 0,5 g.

4. Composition selon l'une quelconque des revendications précédentes, dans laquelle le polybutadiène fonctionnalisé présente un taux moyen de chaînes fonctionnalisées compris entre 25% et 80%, de préférence compris entre 25% et 60%.

5. Composition selon l'une quelconque des revendications précédentes, dans laquelle le taux du polybutadiène fonctionnalisé est compris dans un domaine allant de 50 à 100 pce, de préférence de 75 à 100 pce, de préférence encore de 90 à 100 pce.

6. Composition selon l'une quelconque des revendications précédentes, dans laquelle la charge renforçante comprend majoritairement de la silice.

7. Composition selon l'une quelconque des revendications précédentes, dans laquelle le taux de charge renforçante dans la composition est compris dans un domaine allant de 40 à 200 pce, de préférence de 90 à 180 pce, de préférence de 100 à 150 pce.

8. Composition selon l'une quelconque des revendications précédentes, dans laquelle le système de vulcanisation est à base de soufre et/ou au moins un agent donneur de soufre.

9. Composition selon l'une quelconque des revendications précédentes, dans laquelle la composition comprend en outre au moins une résine plastifiante présentant une température de transition vitreuse supérieure à 20°C.

10. Composition selon la revendication 9, dans laquelle la résine plastifiante présentant une température de transition vitreuse supérieure à 20°C est choisie dans le groupe constitué par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et leurs mélanges.

11. Composition selon l'une quelconque des revendications 9 à 10, dans laquelle le taux de la résine plastifiante présentant une température de transition vitreuse supérieure à 20°C, dans la composition est compris dans un domaine allant de 25 à 100 pce, de préférence entre 50 et 100 pce, de préférence entre 55 et 90 pce.

12. Composition selon l'une quelconque des revendications précédentes, dans laquelle la composition comprend en outre optionnellement de 0 à 60 pce de plastifiant liquide à 23°C.

13. Composition selon la revendication 12, dans laquelle le plastifiant liquide à 23°C est choisi dans le groupe constitué par les polymères diéniques liquides, les huiles polyoléfiniques, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et leurs mélanges.

14. Composition selon l'une quelconque des revendications 12 à 13, dans laquelle, le taux du plastifiant liquide à 23°C dans la composition est compris dans un domaine allant de 1 à 40 pce, de préférence de 2 à 15 pce.

15. Bandage pneumatique ou non pneumatique comportant une composition de caoutchouc selon l'une quelconque des revendications 1 à 14 dans la bande de roulement du bandage.


**Patentansprüche**

1. Kautschukzusammensetzung auf Basis einer Elastomermatrix, umfassend ein funktionalisiertes Polybutadien, mindestens einen verstärkenden Füllstoff und ein Vernetzungssystem, wobei das funktionalisierte Polybutadien durch ein Verfahren erhältlich ist, dass die folgenden Schritte umfasst:

   a) Homopolymerisieren von Butadien mit Hilfe eines katalytischen Systems zur Bildung eines pseudo-lebenden Elastomers, wobei das katalytische System mindestens auf

   - einem konjugierten Dienmonomer,
   - einem Salz einer organischen Phosphonsäure mit einem oder mehreren Seltenerdmetallen,
   - einem aluminiumhaltigen Alkylierungsmittel und
   - einem Halogendonor, der ein Alkylaluminiumhalogenid umfasst,

   basiert,
   wobei das Salz in Suspension oder in Lösung in mindestens einem gesättigten inerten Kohlenwasserstoff-Lösungsmittel vom aliphatischen oder alicyclischen Typ vorliegt;
   b) Zugeben einer polyfunktionellen Verbindung mit mindestens drei funktionellen Gruppen zu dem in Schritt (a) gebildeten pseudo-lebenden Elastomer, wobei die funktionelle Gruppe mit dem reaktiven Ende des pseudo-lebenden Elastomers reagieren kann;
   c) Zugeben eines Funktionalisierungsmittels der Formel A-Ri-B zu der in Schritt (b) gebildeten Mischung, wobei A für eine Gruppe steht, die mit dem reaktiven Ende des pseudo-lebenden Elastomers reagieren kann, Ri für ein Atom oder eine Gruppe von Atomen, das bzw. die eine Bindung zwischen A und B bildet, steht und B für eine Funktion steht, die mit einem verstärkenden Füllstoff reagieren kann;
   d) Gewinnen des funktionalisierten Polybutadiens; wobei bei dem Verfahren die gesamte molare Menge an Aluminium in dem Polymerisationsmedium derart beschaffen ist, dass das Aluminium/Seltenerdmetallsalz-Molverhältnis einen Wert zwischen 1 und 5 hat und wobei die Polymerisation bei einer Temperatur zwischen 40 °C und 90 °C durchgeführt wird.

2. Zusammensetzung nach Anspruch 1, wobei das funktionalisierte Polybutadien freie Polybutadienketten, die nur mit dem Funktionalisierungsmittel reagiert haben, und Polybutadienketten, die über die polyfunktionelle Verbindung aneinander gebunden sind, umfasst.

3. Zusammensetzung nach einem der vorhergehenden Ansprüche, wobei das funktionalisierte Polybutadien einen Cold-Flow-Wert CF(1+6) bei 100 °C kleiner als 1 g, vorteilhafter kleiner als 0,5 g, aufweist.

4. Zusammensetzung nach einem der vorhergehenden Ansprüche, wobei das funktionalisierte Polybutadien einen mittleren Gehalt an funktionalisierten Ketten zwischen 25 % und 80 %, vorzugsweise 25 % und 60 %, aufweist.

5. Zusammensetzung nach einem der vorhergehenden Ansprüche, wobei der Gehalt an funktionalisiertem Polybutadien in einem Bereich von 50 bis 100 phe, vorzugsweise 75 bis 100 phe, weiter bevorzugt 90 bis 100 phe, liegt.

6. Zusammensetzung nach einem der vorhergehenden Ansprüche, wobei der verstärkende Füllstoff hauptsächlich Kieselsäure umfasst.

7. Zusammensetzung nach einem der vorhergehenden Ansprüche, wobei der Gehalt an verstärkendem Füllstoff in der Zusammensetzung in einem Bereich von 40 bis 200 phe, vorzugsweise 90 bis 180 phe, vorzugsweise 100 bis 150 phe, liegt.

8. Zusammensetzung nach einem der vorhergehenden Ansprüche, wobei das Vulkanisationssystem auf Schwefel und/oder mindestens einem Schwefeldonor basiert.

9.  Zusammensetzung nach einem der vorhergehenden Ansprüche, wobei die Zusammensetzung außerdem mindestens ein Weichmacherharz mit einer Glasübergangstemperatur von mehr als 20 °C umfasst.

10. Zusammensetzung nach Anspruch 9, wobei das Weichmacherharz mit einer Glasübergangstemperatur von mehr als 20 °C aus der Gruppe bestehend aus Cyclopentadien-Homopolymer- oder -Copolymerharzen, Dicyclopentadien-Homopolymer- oder -Copolymerharzen, Terpen-Homopolymer- oder -Copolymerharzen, C5-Schnitt-Homopolymer- oder -Copolymerharzen, C9-Schnitt-Homopolymer- oder -Copolymerharzen, alpha-Methylstyrol-Homopolymer- oder -Copolymerharzen und Mischungen davon ausgewählt ist.

11. Zusammensetzung nach einem der Ansprüche 9 bis 10, wobei der Gehalt an Weichmacherharz mit einer Glasübergangstemperatur von mehr als 20 °C in der Zusammensetzung in einem Bereich von 25 bis 100 phe, vorzugsweise zwischen 50 und 100 phe, vorzugsweise zwischen 55 und 90 phe, liegt.

12. Zusammensetzung nach einem der vorhergehenden Ansprüche, wobei die Zusammensetzung außerdem gegebenenfalls 0 bis 60 phe bei 23 °C flüssigen Weichmacher umfasst.

13. Zusammensetzung nach Anspruch 12, wobei der bei 23 °C flüssige Weichmacher aus der Gruppe bestehend aus flüssigen Dienpolymeren, Polyolefinölen, naphthenischen Ölen, Paraffinölen, DAE-Ölen, MES-Ölen, TDAE-Ölen, RAE-Ölen, TRAE-Ölen, SRAE-Ölen, Mineralölen, Pflanzenölen, Ether-Weichmachern, Ester-Weichmachern, Phosphat-Weichmachern, Sulfonat-Weichmachern und Mischungen davon ausgewählt ist.

14. Zusammensetzung nach einem der Ansprüche 12 bis 13, wobei der Gehalt an bei 23 °C flüssigem Weichmacher in der Zusammensetzung in einem Bereich von 1 bis 40 phe, vorzugsweise 2 bis 15 phe, liegt.

15. Luft- oder Vollreifen, umfassend eine Kautschukzusammensetzung nach einem der Ansprüche 1 bis 14 in der Lauffläche des Reifens.

**Claims**

1.  Rubber composition based on an elastomer matrix comprising a functionalized polybutadiene, on at least one reinforcing filler and a crosslinking system, wherein the functionalized polybutadiene is capable of being obtained by a process comprising the following stages:

    (a) homopolymerizing butadiene using a catalytic system in order to form a pseudo-living elastomer, said catalytic system being based on at least:

       - a conjugate diene monomer,
       - a salt of one or more rare earth metals of an organic phosphoric acid,
       - an aluminium-comprising alkylating agent, and
       - a halogen donor comprising an alkylaluminium halide, said salt being in suspension or in solution in at least one inert and saturated hydrocarbon solvent of aliphatic or alicyclic type;

    (b) adding, to the pseudo-living elastomer formed in stage (a), a polyfunctional compound comprising at least three functional groups, said functional group being capable of reacting with the reactive end of the pseudo-living elastomer;
    (c) adding, to the mixture formed in stage (b), a functionalizing agent corresponding to the formula A-Ri-B, with A denoting a group capable of reacting with the reactive end of the pseudo-living elastomer, Ri denoting an atom or a group of atoms forming a bond between A and B, and B denoting a function capable of reacting with a reinforcing filler;
    (d) recovering the functionalized polybutadiene;

    wherein process the total molar amount of aluminium in the polymerization medium is such that the "aluminium"/"rare earth metal salt" molar ratio exhibits a value of between 1 and 5 and wherein process the polymerization is carried out at a temperature of between 40°C and 90°C.

2.  Composition according to Claim 1, wherein the functionalized polybutadiene comprises free polybutadiene chains which have reacted only with the functionalizing agent and polybutadiene chains bonded together via the polyfunctional compound.

3. Composition according to either one of the preceding claims, wherein the functionalized polybutadiene exhibits a cold flow CF(1+6) value at 100°C of less than 1 g, preferably of less than 0.5 g.

4. Composition according to any one of the preceding claims, wherein the functionalized polybutadiene exhibits a mean content of functionalized chains of between 25% and 80%, preferably of between 25% and 60%.

5. Composition according to any one of the preceding claims, wherein the content of the functionalized polybutadiene is within a range extending from 50 to 100 phr, preferably from 75 to 100 phr, or preferably from 90 to 100 phr.

6. Composition according to any one of the preceding claims, wherein the reinforcing filler predominantly comprises silica.

7. Composition according to any one of the preceding claims, wherein the content of reinforcing filler in the composition is within a range extending from 40 to 200 phr, preferably from 90 to 180 phr, preferably from 100 to 150 phr.

8. Composition according to any one of the preceding claims, wherein the vulcanization system is based on sulfur and/or at least one sulfur-donating agent.

9. Composition according to any one of the preceding claims, wherein the composition additionally comprises at least one plasticizing resin exhibiting a glass transition temperature of greater than 20°C.

10. Composition according to Claim 9, wherein the plasticizing resin exhibiting a glass transition temperature of greater than 20°C is selected from the group consisting of cyclopentadiene homopolymer or copolymer resins, dicyclopentadiene homopolymer or copolymer resins, terpene homopolymer or copolymer resins, $C_5$ cut homopolymer or copolymer resins, $C_9$ cut homopolymer or copolymer resins, $\alpha$-methylstyrene homopolymer or copolymer resins and their mixtures.

11. Composition according to any one of Claims 9 to 10, wherein the content of the plasticizing resin exhibiting a glass transition temperature of greater than 20°C in the composition is within a range extending from 25 to 100 phr, preferably between 50 and 100 phr, preferably between 55 and 90 phr.

12. Composition according to any one of the preceding claims, wherein the composition additionally optionally comprises from 0 to 60 phr of plasticizer which is liquid at 23°C.

13. Composition according to Claim 12, wherein the plasticizer which is liquid at 23°C is selected from the group consisting of liquid diene polymers, polyolefin oils, naphthenic oils, paraffinic oils, DAE oils, MES oils, TDAE oils, RAE oils, TRAE oils, SRAE oils, mineral oils, vegetable oils, ether plasticizers, ester plasticizers, phosphate plasticizers, sulfonate plasticizers and their mixtures.

14. Composition according to any one of Claims 12 to 13, wherein the content of the plasticizer which is liquid at 23°C in the composition is within a range extending from 1 to 40 phr, preferably from 2 to 15 phr.

15. Pneumatic or nonpneumatic tyre comprising a rubber composition according to any one of Claims 1 to 14 in the tread of the tyre.

**RÉFÉRENCES CITÉES DANS LA DESCRIPTION**

**Documents brevets cités dans la description**

- WO 2012069565 A
- WO 0238636 A
- WO 9736724 A
- WO 9916600 A
- WO 2006069792 A
- WO 2006069793 A
- WO 2008003434 A
- WO 2008003435 A
- WO 0316837 A

- WO 02088238 A
- WO 0210269 A
- EP 0501227 A
- EP 0735088 A
- EP 0810258 A
- WO 0005300 A
- WO 0005301 A
- WO 0318332 A
- WO 2013095499 A

**Littérature non-brevet citée dans la description**

- *CHEMICAL ABSTRACTS,* 3410-77-3
- *CHEMICAL ABSTRACTS,* 34036-80-1
- *CHEMICAL ABSTRACTS,* 1325615-33-5
- **BRUNAUER ; EMMETT ; TELLER.** *The Journal of the American Chemical Society,* Février 1938, vol. 60, 309

- **R. MILDENBERG ; M. ZANDER ; G. COLLIN.** Hydrocarbon Resins. VCH, 1997
- **VILMIN, F. ; DUSSAP, C. ; COSTE, N.** *Applied Spectroscopy,* 2006, vol. 60, 619-29